(19)

Europäisches
Patentamt
European
Patent Office
Office européen
des brevets

(11) **EP 2 628 285 B1**

(12) **EUROPEAN PATENT SPECIFICATION**

(45) Date of publication and mention
of the grant of the patent:
**07.03.2018 Bulletin 2018/10**

(51) Int Cl.:
**H04L 27/26** *(2006.01)*　　**H04L 5/00** *(2006.01)*

(21) Application number: **11773955.7**

(86) International application number:
**PCT/US2011/055988**

(22) Date of filing: **12.10.2011**

(87) International publication number:
**WO 2012/051319 (19.04.2012 Gazette 2012/16)**

(54) **METHOD AND APPARATUS FOR GENERATING AN OFDM SYMBOL**

VERFAHREN UND VORRICHTUNG ZUR ERZEUGUNG EINES OFDM-SYMBOLS

PROCÉDÉ ET APPAREIL DE GÉNÉRATION DE SYMBOLE OFDM

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **06.01.2011 US 201161430391 P
11.01.2011 US 201161431763 P
13.10.2010 US 392610 P**

(43) Date of publication of application:
**21.08.2013 Bulletin 2013/34**

(73) Proprietor: **Marvell World Trade Ltd.
St. Michael 14027 (BB)**

(72) Inventors:
• **BANERJEA, Raja**
**Sunnyvale, CA 94085 (US)**
• **ZHANG, Hongyuan**
**Fremont, CA 94555 (US)**
• **LIU, Yong**
**Campbell, CA 95008 (US)**

(74) Representative: **Grünecker Patent- und
Rechtsanwälte
PartG mbB
Leopoldstraße 4
80802 München (DE)**

(56) References cited:
**WO-A2-2005/112319　　US-A1- 2004 208 253
US-A1- 2008 205 455**

• **Youham Kim et al.: "160 MHz PHY Transmission",
Altheros P802.11 IEEE Draft Standard for
Information Technology: - Specific Requirements
- Part 11: Wireless LAN Medium Access Control
(MAC) and Physical Layer (PHY) Specifications,
vol. IEEE P802.11 Working Group on Wireless
LAN 17 May 2010 (2010-05-17), XP002669574,
Retrieved from the Internet:
URL:https://mentor.ieee.org/802.11/dcn/10/
11-10-0378-01-00ac-160-mhz-phy-transmissio
n.ppt [retrieved on 2012-02-14]**

**Description**

The present disclosure relates generally to communication systems and, more particularly, to wireless networks that utilize orthogonal frequency division multiplexing (OFDM).

The background description provided herein is for the purpose of generally presenting the context of the disclosure. Work of the presently named inventors, to the extent it is described in this background section, as well as aspects of the description that may not otherwise qualify as prior art at the time of filing, are neither expressly nor impliedly admitted as prior art against the present disclosure.

Wireless local area network (WLAN) technology has evolved rapidly over the past decade. Development of WLAN standards such as the Institute for Electrical and Electronics Engineers (IEEE) 802.11a, 802.11b, 802.11g, and 802.11n Standards has improved single-user peak data throughput. For example, the IEEE 802.11b Standard specifies a single-user peak throughput of 11 megabits per second (Mbps), the IEEE 802.1 la and 802.1 lg Standards specify a single-user peak throughput of 54 Mbps, and the IEEE 802.1 ln Standard specifies a single-user peak throughput of 600 Mbps. Work has begun on a new standard, IEEE 802.11ac, that promises to provide even greater throughput.

Youhan Kim et al: "160 MHz PHY Transmission", Altheros P802.11 IEEE Draft Standard for Information Technology: - Specific Requirements - Part 11: Wireless LAN Medium Access Control (MAC) and Physical Layer (PHY) Specifications, vol. IEEE P802.11, Working Group on Wireless LAN 17 May 2010, retrieved from the Internet: URL:https://mentor.ieee.org/802.11/dcn/10/ 11-10-0378-01-00ac-160-mhz-phy-transmission.ppt discloses the placing of two 80 MHz tone allocations next to each other in frequency.

US 2004/208253 A1 discloses a preamble sequence generating apparatus and method in a BWA communication system using OFDM. An ARM code generator generates at least one ARM code of a different length. A sub-carrier selection and frequency mask unit maps a second number of ARM code components to a second number of sub-carriers among a third number of OFDM sub-carriers distributed equally in a frequency band and maps null components to sub-carriers excluding from the second number of sub-carriers.

US 2008/205455 A1 discloses a data-transmission-side communication apparatus including a mapping unit that executes a mapping for a data sub-carrier based on a multipath delay time in a transmission path and a guard-band adding unit that changes an amount of a guard band to be added to a signal on the data sub-carrier depending on information on the guard band obtained based on the multipath delay time. A data-reception-side communication apparatus includes an equalizing unit that suppresses a multipath exceeding a guard interval based on the information on the guard band and a demapping unit that executes a demapping for an equalized signal based on the multipath delay time.

WO 2005/112319 A2 discloses a device for wireless communication. The device includes a transmitter operable to transmit an orthogonal frequency division multiplex symbol. The orthogonal frequency division multiplex symbol has a first set of copied tones adjacent a first end of the orthogonal frequency division multiplex symbol, a second set of copied tones adjacent a second end of the orthogonal frequency division multiplex symbol, and a plurality of data tones provided between the first and second sets of copied tones. The first and second sets of copied tones include copies of at least some of the plurality of data tones.

It is the object of the present invention to provide an improved method and communication device for generating an OFDM symbol.

This object is solved by the subject matter of the independent claims.

Preferred embodiments are defined by the dependent claims.

The invention is defined by the appended claims 1-15. The embodiments that do not fall under the scope of the claims have to be interpreted as examples useful for understanding the invention. In one embodiment, a method is implemented using a communication device configured to generate, when in a first transmit mode, a first OFDM symbol having i) a first channel bandwidth, ii) a first number of lower-edge guard tones, and iii) a first number of upper-edge guard tones, and, when in a second transmit mode, a second OFDM symbol having i) a second channel bandwidth, ii) a second number of lower-edge guard tones, and iii) a second number of upper-edge guard tones. The first OFDM symbol is generated using a first transmit flow unit that includes a first tone mapping unit, and the second OFDM symbol is generated using a second transmit flow unit that includes a second tone mapping unit. The method comprises generating, using the first transmit flow unit, a first set of OFDM tones when in a composite channel transmit mode, and generating, using the second transmit flow unit, a second set of OFDM tones when in the composite channel transmit mode. The method also comprises generating a composite channel OFDM symbol comprising the first and second sets of OFDM tones when in the composite channel transmit mode. The composite channel OFDM symbol includes lower-edge and upper-edge guard tones, with at least one of i) the number of lower-edge guard tones being greater than the first number of lower-edge guard tones and greater than the second number of lower-edge guard tones, and ii) the number of upper-edge guard tones being greater than the first number of upper-edge guard tones and greater than the second number of upper-edge guard tones.

In another embodiment, a communication device comprises a network interface including at least i) a first transmit flow unit that includes a first tone mapping unit, and ii) a second transmit flow unit that includes a second tone mapping unit. The network interface is configured to generate, using the first transmit flow unit and when in a first transmit mode, a first OFDM symbol having i) a first channel bandwidth, ii) a first number of lower-edge guard tones, and iii) a first number of upper-edge guard tones. Additionally, the network is configured to generate, using the second transmit flow unit and when in a second transmit mode, a second OFDM symbol having i) a second channel bandwidth, ii) a second number of lower-edge guard tones, and iii) a second number of upper-edge guard tones. Also, the network is configured to generate, using the first transmit flow unit and when in a composite channel transmit mode, a first set of OFDM tones, and generate, using the second transmit flow unit and when in the composite channel transmit mode, a second set of OFDM tones. Further, the network is configured to generate, when in the composite channel transmit mode, a composite channel OFDM symbol comprising the first and second sets of OFDM tones. The composite channel OFDM symbol includes lower-edge and upper-edge guard tones, with at least one of i) the number of lower-edge guard tones being greater than the first number of lower-edge guard tones and greater than the second number of lower-edge guard tones, and ii) the number of upper-edge guard tones being greater than the first number of upper-edge guard tones and greater than the second number of upper-edge guard tones.

In yet another embodiment, a method of generating an OFDM symbol utilizes a communication device configured to generate, when in a first transmit mode, a first OFDM symbol having i) a first channel bandwidth, ii) a first number of lower-edge guard tones, and iii) a first number of upper-edge guard tones, and, when in a second transmit mode, a second OFDM symbol having i) a second channel bandwidth, ii) a second number of lower-edge guard tones, and iii) a second number of upper-edge guard tones. The first OFDM symbol is generated using a first transmit flow unit that includes a first tone mapping unit, and the second OFDM symbol is generated using a second transmit flow unit that includes a second tone mapping unit. The method comprises generating, using the first transmit flow unit, a first set of OFDM tones when in a composite channel transmit mode, and generating, using the second transmit flow unit, a second set of OFDM tones when in the composite channel transmit mode. The method also comprises generating a composite channel OFDM symbol comprising the first and second sets of OFDM tones when in the composite channel transmit mode. The composite channel OFDM symbol includes lower-edge and upper-edge guard tones, and wherein the total number of lower-edge and upper-edge guard tones is i) greater than the sum of the first number of lower-edge guard tones and the second number of upper-edge guard tones, and ii) greater than the sum of the first number of upper-edge guard tones and the second number of lower-edge guard tones.

## Brief Description of the Drawings

Fig. 1 is a block diagram of an example system that utilizes techniques of the present disclosure, according to an embodiment.

Fig. 2 is a block diagram of an example physical layer processing unit that may be utilized in one or more communication devices of Fig. 1, according to an embodiment.

Fig. 3A and 3B are diagrams of example orthogonal frequency division multiplexing (OFDM) symbols each generated using a single transmit flow unit of a physical layer processing unit such as the example physical layer processing unit of Fig. 2, according to an embodiment.

Figs. 4A-4D are diagrams of example composite channel OFDM symbols generated using multiple transmit flow units of a physical layer processing unit such as the physical layer processing unit of Fig. 2, according to various embodiments.

Fig. 5 is a flow diagram of an example method for generating a composite channel OFDM symbol having an increased number of guard tones, according to an embodiment.

Fig. 6 is a diagram of an example data unit, according to an embodiment.

Fig. 7 is a frequency-domain diagram of an example preamble with legacy and non-legacy portions for a data unit such as the data unit of Fig. 6, according to an embodiment.

Fig. 8 is an example channelization diagram for a communication system such as the wireless network of Fig. 1, according to an embodiment.

Figs. 9A-9B are further diagrams of example composite channel OFDM symbols generated using multiple transmit flow units of a physical layer processing unit such as the physical layer processing unit of Fig. 2, according to various embodiments.

Fig. 10 is another frequency-domain diagram of an example preamble with legacy and non-legacy portions for a data unit such as the data unit of Fig. 6, according to an embodiment.

## Detailed Description

In embodiments described below, a wireless network device (e.g., an access point (AP)) of a wireless local area network (WLAN) transmits one or more streams of orthogonal frequency division multiplexing (OFDM) symbols to one or more other devices (e.g., client stations). The OFDM symbols are transmitted using one of a plurality of possible channel bandwidths. In an embodiment, a physical layer (PHY) processing unit of the wireless network device includes multiple transmit flow units that are each configured to perform tone mapping of an OFDM symbol for one of the possible channel bandwidths. In some embodiments and/or scenarios, two or more of these transmit flow units are additionally configured to perform tone mapping for portions of an OFDM symbol transmitted in a composite channel. For example, first and second transmit flow units that are configured to perform tone mapping for 40 and 80 MHz OFDM symbols, respectively, are together capable of performing tone mapping for a 120 MHz composite channel OFDM symbol, in an embodiment. According to various embodiments, the tone mapping performed by the utilized transmit flow units results in an increased number of outer edge guard tones for the composite channel OFDM symbol as compared to the component channels. For example, a 120 MHz OFDM symbol generated by 40 and 80 MHz transmit flow units includes more upper-edge and/or lower-edge guard tones than the 40 or 80 MHz OFDM symbols, in an embodiment. In embodiments described below, the number of guard tones for the composite channel OFDM symbol is increased without reducing the number of data and/or pilot tones.

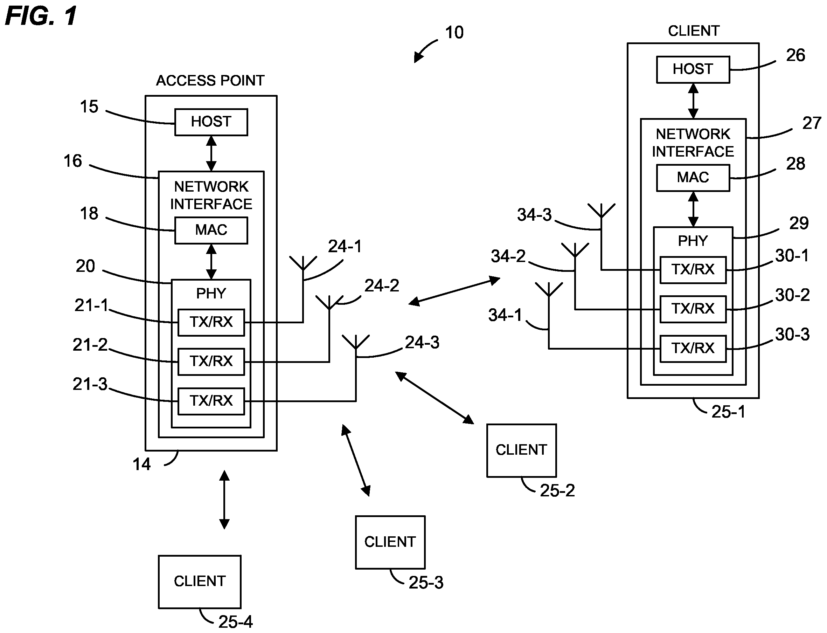

Fig. 1 is a block diagram of an example WLAN 10, according to an embodiment. An AP 14 includes a host processor 15 coupled to a network interface 16. The network interface 16 includes a medium access control (MAC) processing unit 18 and a PHY processing unit 20. The PHY processing unit 20 includes a plurality of transceivers 21, and the transceivers are coupled to a plurality of antennas 24. Although three transceivers 21 and three antennas 24 are illustrated in Fig. 1, the AP 14 can include different numbers (e.g., 1, 2, 4, 5, etc.) of transceivers 21 and antennas 24 in other embodiments. In one embodiment, the MAC processing unit 18 and the PHY processing unit 20 are configured to operate according to a first communication protocol. The first communication protocol is also referred to herein as a very high throughput (VHT) protocol. In another embodiment, the MAC unit processing 18 and the PHY processing unit 20 are also configured to operate according to at least a second communication protocol (e.g., the IEEE 802.11n Standard, the IEEE 802.11g Standard, the IEEE 802.11a Standard, etc.).

The WLAN 10 includes a plurality of client stations 25. Although four client stations 25 are illustrated in Fig. 1, the WLAN 10 can include different numbers (e.g., 1, 2, 3, 5, 6, etc.) of client stations 25 in various scenarios and embodiments. At least one of the client stations 25 (e.g., client station 25-1) is configured to operate at least according to the first communication protocol.

The client station 25-1 includes a host processor 26 coupled to a network interface 27. The network interface 27 includes a MAC processing unit 28 and a PHY processing unit 29. The PHY processing unit 29 includes a plurality of transceivers 30, and the transceivers 30 are coupled to a plurality of antennas 34. Although three transceivers 30 and three antennas 34 are illustrated in Fig. 1, the client station 25-1 can include different numbers (e.g., 1, 2, 4, 5, etc.) of transceivers 30 and antennas 34 in other embodiments.

In an embodiment, one or all of the client stations 25-2, 25-3, and 25-4 has a structure the same as or similar to the client station 25-1. In these embodiments, the client stations 25 that are structured the same as or similar to the client station 25-1 have the same or a different number of transceivers and antennas. For example, the client station 25-2 has only two transceivers and two antennas, according to an embodiment.

In various embodiments, the PHY processing unit 20 of the AP 14 is configured to generate data units conforming to the first communication protocol. The transceiver(s) 21 is/are configured to transmit the generated data units via the antenna(s) 24. Similarly, the transceiver(s) 24 is/are configured to receive the data units via the antenna(s) 24. The PHY processing unit 20 of the AP 14 is configured to process received data units conforming to the first communication protocol, according to an embodiment.

In various embodiments, the PHY processing unit 29 of the client device 25-1 is configured to generate data units conforming to the first communication protocol. The transceiver(s) 30 is/are configured to transmit the generated data units via the antenna(s) 34. Similarly, the transceiver(s) 30 is/are configured to receive data units via the antenna(s) 34. The PHY processing unit 29 of the client device 25-1 is configured to process received data units conforming to the first communication protocol, according to an embodiment.

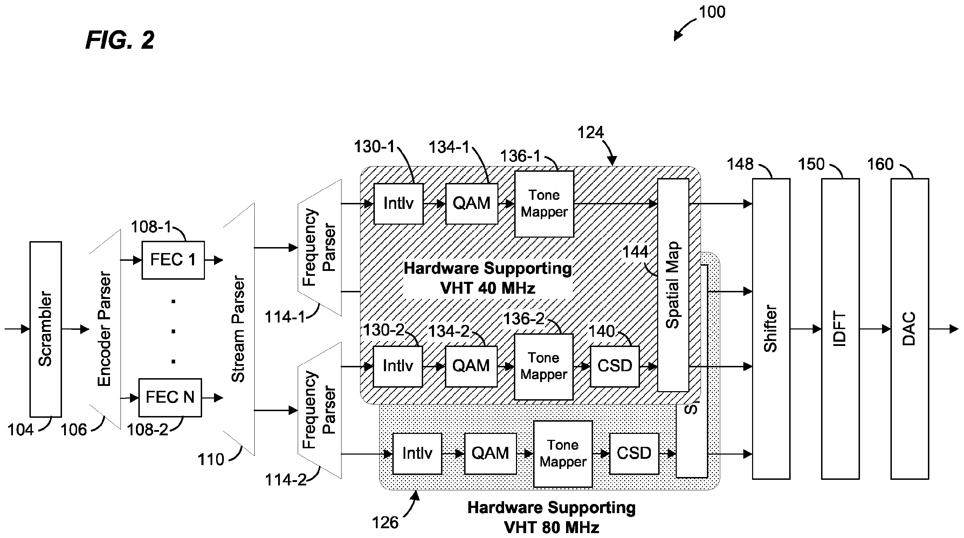

Fig. 2 is a block diagram of an example PHY processing unit 100 capable of generating a 120 MHz composite channel OFDM symbol according to the VHT protocol, according to an embodiment. Referring to Fig. 1, the AP 14 and the client station 25-1 each include a PHY processing unit such as the PHY processing unit 100, in an embodiment.

The PHY unit 100 includes a scrambler 104 that generally scrambles an information bit stream to reduce the occurrence of long sequences of ones or zeros, according to an embodiment. In another embodiment, the scrambler 104 is replaced with a plurality of parallel scramblers (not shown) located after an encoder parser 106. In this embodiment, each of the parallel scramblers has a respective output coupled to a respective one of a plurality of forward error correction (FEC) encoders 108. The plurality of parallel scramblers operate simultaneously on a demultiplexed stream. In yet another embodiment, the scrambler 104 comprises a plurality of parallel scramblers and a demultiplexer that demultiplexes the information bit stream to the plurality of parallel scramblers, which operate simultaneously on demultiplexed streams. These embodiments may be useful, in some scenarios, to accommodate wider bandwidths and thus higher operating clock frequencies.

The encoder parser 106 is coupled to the scrambler 104. The encoder parser 106 demultiplexes the information bit stream into one or more encoder input streams corresponding to one or more FEC encoders 108. In another embodiment with a plurality of parallel scramblers, the encoder parser 106 demultiplexes the information bit stream into a plurality of streams corresponding to the plurality of parallel scramblers.

Different numbers of encoders 108 operate in parallel in various embodiments and/or scenarios. For example, according to one embodiment, the PHY processing unit 100 includes four encoders 108, and one, two, three, or four encoders operate simultaneously depending on the particular modulation and coding scheme (MCS), bandwidth, and the number of spatial streams. In another embodiment, the PHY processing unit 100 includes five encoders 108, and one, two, three, four, or five encoders operate simultaneously. In another embodiment, the PHY unit 100 includes up to ten encoders 108, and one, two, three, four, five, six, seven, eight, nine, or ten encoders operate simultaneously. In an embodiment, the number of encoders operating simultaneously increments at multiples of the data rate, e.g., every 600 Mbps. For example, one encoder is utilized for data rates up to 600 Mbps, two encoders are utilized for data rates between 600 Mbps and 1200 Mbps, etc., in an embodiment.

Each encoder 108 encodes the corresponding input stream to generate a corresponding encoded stream. In one embodiment, each FEC encoder 108 includes a binary convolutional code (BCC) encoder. In another embodiment, each FEC encoder 108 includes a BCC encoder followed by a puncturing block. In another embodiment, each FEC encoder 108 includes a low density parity check (LDPC) encoder. In yet another embodiment, each FEC encoder 108 additionally includes a BCC encoder followed by a puncturing block. In one embodiment, each FEC encoder 108 is configured to implement any of: 1) BCC encoding without puncturing; 2) BCC encoding with puncturing; or 3) LDPC encoding.

A stream parser 110 parses the one or more encoded streams into one or more spatial streams. For example, in the embodiment illustrated in Fig. 2, the stream parser 110 parses the N encoded streams into two spatial streams. In some embodiments, each spatial stream from the stream parser 110 is input to one of frequency parsers 114. For example, in the embodiment illustrated in Fig. 2, the first spatial stream is input to the frequency parser 114-1 and the second spatial stream is input to the frequency parser 114-2. In other embodiments and/or scenarios, the stream parser 110 is not included, or not used to generate multiple streams. In still other embodiments, the stream parser 110 parses the N encoded streams into more than two spatial streams.

One or more frequency parsers 114 are coupled to the stream parser 110. In some embodiments, each spatial stream output by the stream parser 110 is input to a different one of the frequency parsers 114. For example, in some embodiments where the stream parser 110 outputs more than two spatial streams, the PHY processing unit 100 includes more than two corresponding frequency parsers 114. Each of the frequency parsers 114 allocates bits of the corresponding spatial stream to one or more of transmit flow units 124, 126 (e.g., hardware units), according to various scenarios.

Transmit flow unit 124 is coupled to one output of each of the frequency parsers 114, and includes one path for each spatial stream, in an embodiment. For example, in the embodiment illustrated in Fig. 2, transmit flow 124 includes a first and second path corresponding to the first and second spatial stream outputs, respectively, of the stream parser 110. In some embodiments, the stream parser 110 outputs more than two spatial streams and transmit flow unit 124 includes more than two corresponding paths, with each path being coupled to the stream parser 110 via a different one of the frequency parsers 114.

Each path in transmit flow unit 124 includes an interleaver 130, a modulator 134, and a tone mapping unit 136. In some embodiments, one, some, or all of the paths of transmit flow unit 124 do not include all of these units. For example, in some embodiments, one or more paths of transmit flow unit 124 do not include the interleaver 130 (e.g., interleaving is performed, if at all, prior to stream parser 110, or prior to the frequency parsers 114).

Within transmit flow unit 124, interleavers 130 are coupled to outputs of the frequency parsers 114. More specifically, the interleaver 130-1 of the first path in transmit flow unit 124 is coupled to a first output of the frequency parser 114-1, and the interleaver 130-2 of the second path in transmit flow unit 124 is coupled to a first output of the frequency parser 114-2. Each interleaver 130 interleaves bits (i.e., changes the order of the bits) to prevent long sequences of adjacent noisy bits from entering a decoder at the receiver.

Modulators 134 are coupled to the interleavers 130. Each modulator 134 maps an interleaved sequence of bits to constellation points. More specifically, each modulator 134 translates every bit sequence of length $\log_2(C)$ into one of C constellation points. In various embodiments and/or scenarios, the modulators 134 handle different numbers of constellation points depending on the MCS being utilized. In one embodiment, each modulator 134 is a quadrature amplitude modulation (QAM) modulator that handles C = 2, 4, 16, 64, 256, and 1024. In other embodiments, each modulator 134 handles different modulation schemes corresponding to C equaling different subsets of at least two values from the set {2, 4, 16, 64, 256, 1024}.

Tone mapping units 136 are coupled to the modulators 134. Each of the tone mapping units 136 allocates the constellation points from the preceding modulator 134 to particular data tones of an OFDM symbol according to a tone map. In an embodiment, the tone mapping units 134 also insert any pilot tones, direct current (DC) tones, and/or guard tones, according to the tone map. In another embodiment, the pilot tones, DC tones, and/or guard tones are inserted at a later point, such as after spatial mapping. The total number of tones in the OFDM symbol is dictated by the channel bandwidth, in an embodiment. For example, an OFDM symbol for a 40 MHz channel includes 128 tones and an OFDM symbol for an 80 MHz channel includes 256 tones, in an embodiment.

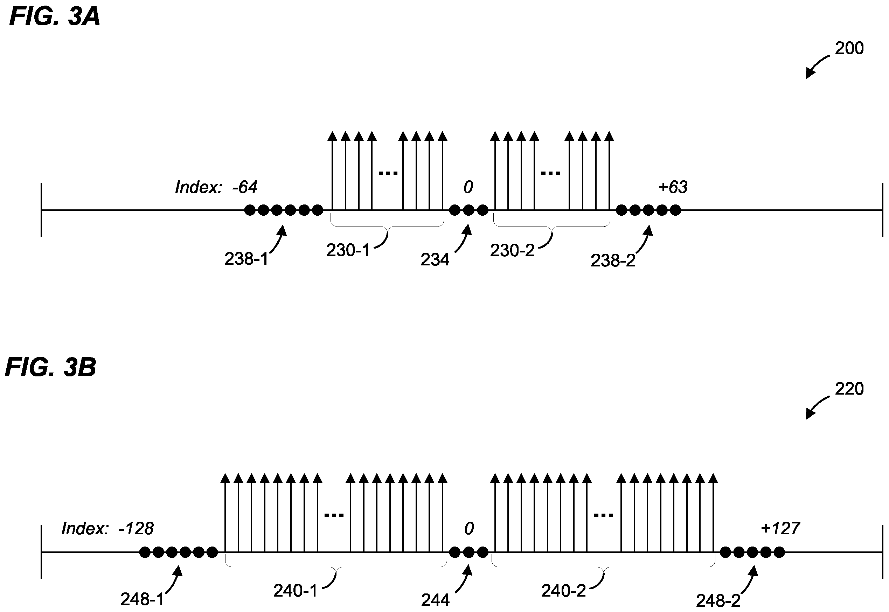

In the embodiment illustrated in Fig. 2, each of the tone mapping units 136 generates a set of OFDM tones for a 40 MHz channel OFDM symbol. In other embodiments, each of the tone mapping units 136 generates a set of OFDM tones for a different channel bandwidth (e.g., 20 MHz, 80 MHz, etc.). The sets of OFDM tones generated by the tone mapping units 136, according to various embodiments and scenarios, are discussed in more detail below in connection with Figs. 3, 4, and 9.

A cyclic shift diversity (CSD) unit 140 is coupled to all but one of the tone mapping units 136 in transmit flow 124 (if more than one spatial stream). For example, in the embodiment illustrated in Fig. 2, only the second frequency-parsed spatial stream (from frequency parser 114-2) passes through a CSD unit in transmit flow 124. Each CSD unit 140 inserts a cyclic shift in order to prevent unintentional beamforming.

A spatial mapping unit 144 is coupled to the output of each path in transmit flow 124. The spatial mapping unit 144 maps the tone-mapped constellation points generated by the tone mapping units 136 (after any cyclic shifting by CSD units 140) to transmit chains. In various embodiments, spatial mapping includes one or more of: 1) direct mapping, in which constellation points from each spatial stream are mapped directly onto transmit chains (i.e., one-to-one mapping); 2) spatial expansion, in which vectors of constellation points from all spatial streams are expanded via matrix multiplication to produce inputs to the transmit chains; and 3) beamforming, in which each vector of constellation points from all of the spatial streams is multiplied by a matrix of steering vectors to produce inputs to the transmit chains.

Transmit flow unit 126 is the same as or similar to transmit flow unit 124, in some embodiments. For example, in the embodiment illustrated in Fig. 2, transmit flow unit 126 includes a first and second path (corresponding to the first and second spatial stream, respectively, of stream parser 110) similar to the first and second path of transmit flow unit 124. Moreover, in the embodiment illustrated in Fig. 2, transmit flow 126 includes an interleaver, modulator, and tone mapping unit in each path similar to the interleaver 130, modulator 134, and tone mapping unit 136 in each path of transmit flow unit 124, with a CSD unit in the second path similar to the CSD unit 140, in an embodiment. Further, in the embodiment illustrated in Fig. 2, transmit flow unit 126 includes a spatial mapping unit similar to the spatial mapping unit 144.

In an embodiment, the tone mapping units of transmit flow unit 126 are similar to the tone mapping units 136 of transmit flow unit 124, and the number of tones in the OFDM symbol generated by transmit flow unit 126 is, as with transmit flow unit 124, dictated by the channel bandwidth. In some embodiments, however, the tone mapping units in transmit flow unit 126 perform tone mapping that corresponds to a different channel bandwidth than the tone mapping units in transmit flow unit 124. For example, in the embodiment illustrated in Fig. 2, each of the tone mapping units in transmit flow unit 126 generates a set of OFDM tones for an 80 MHz channel. In other embodiments, the tone mapping units in transmit flow unit 126 generate sets of OFDM tones for a different channel bandwidth (e.g., 20 MHz, 40 MHz, etc.).

While Fig. 2 illustrates an embodiment with a 40 MHz transmit flow unit 124 and an 80 MHz transmit flow unit 126, other embodiments include additional transmit flow units. Moreover, other embodiments include multiple transmit flow units that correspond to the same channel bandwidth. For example, in various different embodiments, the PHY processing unit 100 includes two 40 MHz transmit flow units, three 40 MHz transmit flow units, two 40 MHz transmit flow units and one 80 MHz transmit flow unit, etc.

In some embodiments, each of the transmit flows 124, 126 is configured to handle a different number of streams than illustrated in Fig. 2.

In some embodiments (e.g., the embodiment illustrated in Fig. 2), the scrambler 104, encoder parser 106, and FEC encoders 108 jointly encode data for all transmit flows (e.g., the 40 MHz and 80 MHz transmit flow units 124, 126), thereby providing coding diversity over the entire composite channel (e.g., 120 MHz). In other embodiments, scrambling, encoder parsing, and/or FEC encoding is performed after the frequency parsers 114.

A shifter 148 is coupled to the outputs of the spatial mapping units of transmit flow units 124, 126. The shifter 148 shifts the OFDM tones generated by the transmit flow unit 124 and/or the transmit flow unit 126 up or down in frequency by a particular number of tones, in an embodiment. In some embodiments, the PHY processing unit 100 does not include the shifter 148. Operation of the shifter 148 is discussed in more detail below according to various embodiments and/or scenarios.

An inverse discrete Fourier transform (IDFT) unit 150 is coupled to the shifter 148, and converts the frequency-domain data output by the shifter 148 (or by transmit flow units 124, 126, if no shifter is included in the PHY processing unit 100) to time-domain signals. In an embodiment, the IDFT unit 150 performs inverse fast Fourier transform (IFFT) operations. The size of the IDFT performed by the IDFT unit 150 is dictated by the channel bandwidth, in an embodiment. For example, a 40 MHz OFDM signal is generated using a size 128 IDFT, an 80 MHz OFDM signal is generated using a size 256 IDFT, and a 160 MHz OFDM signal is generated using a size 512 IDFT, in an embodiment. It is understood by those of ordinary skill in the art that a transmitted OFDM symbol exists as a frequency-domain representation of the OFDM signal prior to IDFT operations. For example, it is understood that the sets of OFDM tones generated by each of transmit flow units 124, 126 are frequency-domain representations of OFDM tones.

In some embodiments, the PHY processing unit 100 includes multiple IDFT units. For example, a first IDFT unit performs IDFT operations on a first spatial stream and a second IDFT unit performs IDFT operations on a second spatial stream, in an embodiment. As another example, a first IDFT unit performs IDFT operations on an output of a first transmit flow unit (e.g., transmit flow unit 124), and a second IDFT unit performs IDFT operations on an output of a second transmit flow unit (e.g., transmit flow unit 126), in an embodiment.

In some embodiments, the IDFT unit 150 output is coupled to a unit (not shown) that prepends, to each OFDM symbol, a guard interval (GI) portion, which is a circular extension of the OFDM symbol. Moreover, in some embodiments, this unit or an additional unit smooths the edges of each OFDM symbol to increase spectral decay. A digital-to-analog converter (DAC) unit 160 is coupled to the IDFT unit 150 (or to any intervening unit(s) that prepends a GI portion, etc.), and outputs an analog, baseband OFDM signal to a transmitter portion of a radio transceiver, in an embodiment. The radio transceiver upconverts the OFDM signal to an RF frequency and amplifies the signal for transmission via one or more antennas.

In operation, in some embodiments and scenarios, a wireless network device that includes the PHY processing unit 100 transmits OFDM signals in a channel bandwidth that corresponds to a single transmit flow. For example, a wireless network device that includes the PHY processing unit 100 with transmit flow units 124, 126 is capable of transmitting OFDM signals in a 40 or 80 MHz channel, in an embodiment. When transmitting an OFDM signal in a channel corresponding to a single transmit flow, each of the frequency parsers 114 allocates all bits of a corresponding spatial stream to that transmit flow unit, in an embodiment. For example, each of the frequency parsers 114 allocates all bits of a corresponding spatial stream to transmit flow unit 124 when transmitting in a 40 MHz transmit mode, and allocates all bits of the corresponding spatial stream to transmit flow unit 126 when transmitting in an 80 MHz transmit mode, in an embodiment.

When OFDM signals are to be transmitted over a channel corresponding to a single transmit flow unit (e.g., 40 MHz), the applicable transmit flow unit arranges the OFDM tones, including data tones, pilot tones, guard tones, and DC tones, according to a particular protocol (e.g., the VHT protocol), in an embodiment. For example, the protocol may dictate that a certain number of guard tones be included at each edge of the OFDM symbol.

Fig. 3A is a diagram of an example OFDM symbol 200 generated using a single transmit flow unit of a PHY processing unit. Referring to Fig. 2, for example, the symbol 200 is generated using the 40 MHz transmit flow 124 of the PHY processing unit 100, in an embodiment. The symbol 200 includes data and pilot tones 230, DC tones 234, and guard tones 238. The DC tones 234 are null tones that are inserted at the center of the channel to avoid carrier leakage and DC issues, in an embodiment. The guard tones 238 are null tones that are inserted at the channel edges to avoid interference with other frequency channels or bands, in an embodiment. In some scenarios, the guard tones 238 are needed to meet regulatory spectral mask requirements.

As stated above, the number of tones in an OFDM symbol is dictated by the channel bandwidth, in an embodiment. In one embodiment where the example OFDM symbol 200 is generated by the 40 MHz transmit flow unit 124, for example, the symbol 200 includes 128 tones, which are indexed from -64 to +63. In an embodiment, the symbol 200 includes 57 data and pilot tones (tones 230-1) in a lower part of the channel, 57 data and pilot tones (tones 230-2) in an upper part of the channel, three DC tones 234 at the center of the channel (i.e., corresponding to indices -1, 0, +1), six guard tones (tones 238-1) at the lower edge of the channel, and five guard tones (tones 238-2) at the upper edge of the channel.

Fig. 3B is a diagram of another example OFDM symbol 220 generated using a single transmit flow unit of a PHY processing unit. Referring to Fig. 2, for example, the symbol 220 is generated using the 80 MHz transmit flow unit 126 of the PHY processing unit 100, in an embodiment. Similar to the symbol 200, the symbol 220 includes data and pilot tones 240, DC tones 244, and guard tones 248. In one embodiment where the example symbol 200 is generated by the 80 MHz transmit flow unit 126, the symbol 220 includes 256 tones, which are indexed from -128 to +127. In an embodiment, the tone symbol 220 includes 121 data and pilot tones (tones 240-1) in a lower part of the channel, 121 data and pilot tones (tones 240-2) in an upper part of the channel, three DC tones 244 at the center of the channel (i.e.,

corresponding to indices -1, 0, +1), six guard tones (tones 248-1) at the lower edge of the channel, and five guard tones (tones 248-2) at the upper edge of the channel.

In other embodiments, single transmit flow units are configured to generate OFDM symbols different than the example symbols 200 and 220 of Figs. 3A and 3B. For example, a single transmit flow unit is configured to generate an OFDM symbol having more or fewer data and pilot tones (e.g., corresponding to a wider channel bandwidth), more or fewer DC tones, more or fewer upper-edge and/or lower-edge DC tones, etc., in various embodiments.

According to various disclosed embodiments, a wireless network device can also utilize multiple transmit flow units to generate an OFDM symbol having a composite channel bandwidth. Referring to Fig. 2, for example, a wireless network device that includes the PHY processing unit 100 with 40 MHz transmit flow unit 124 and 80 MHz transmit flow unit 126 is additionally capable of generating OFDM symbols for a composite, 120 MHz channel, in an embodiment.

When composite channel OFDM symbols are generated, each utilized transmit flow generates only a portion of the tones for the OFDM symbol. For example, when generating a 120 MHz composite channel OFDM symbol, a 40 MHz transmit flow unit generates OFDM tones for a 40 MHz section of the 120 MHz channel, and an 80 MHz transmit flow unit generates OFDM tones for an 80 MHz section of the 120 MHz channel, in an embodiment. As another example, when generating a 120 MHz composite channel OFDM symbol, each of three 40 MHz transmit flow units generates OFDM tones for a 40 MHz section of the 120 MHz channel, in an embodiment.

The OFDM tones generated by the utilized transmit flow units can be combined in different ways according to various embodiments to form the composite channel OFDM symbol. In one embodiment, the tones that the utilized transmit flow units would generate in non-composite channel modes (e.g., the tones 200 and 220 of Figs. 3A and 3B) are simply concatenated prior to IDFT operations. For example, with respect to the example tones 200 and 220 of Figs. 3A and 3B, concatenation results in a composite channel OFDM symbol that includes six guard tones at the lower edge of the composite band and five guard tones at the upper edge, regardless of the order in which the tones 200 and 220 are concatenated.

The greater bandwidth of the composite channel may, in some scenarios, cause OFDM signal transmissions to fall near a frequency range in which interference should be avoided (e.g., due to regulatory requirements). As an example, the frequency band currently planned for IEEE 802.11 standard communications in China is 5725-5850 MHz (i.e., 125 MHz bandwidth), with signals falling outside that range being subject to a maximum power limit. Ideally, a 120 MHz composite channel would be centered at 5787.5 MHz to maintain a 2.5 MHz gap between the Chinese band and the 120 MHz transmission at both the upper and lower band edges. Certain IEEE 802.11 devices (e.g., devices designed for IEEE 802.11 operation in the United States), however, may at best provide a 5785 MHz or 5790 MHz center (carrier) frequency, which would provide no frequency buffer between the lower or upper limit, respectively, of the 125 MHz Chinese band and the edges of the 120 MHz composite channel. Even if the 120 MHz channel is centered perfectly within the 125 MHz Chinese band (i.e., with a 2.5 MHz gap between the band limits and each edge of the 120 MHz channel), meeting spectral mask requirements can pose a challenge. Thus, in scenarios such as this, a larger number of guard tones at the lower and/or upper edge of the composite channel transmission may be needed to meet regulatory or other requirements.

Accordingly, in some embodiments, one or more utilized transmit flow units insert additional guard tones located at a lower and/or upper edge of the composite channel OFDM symbol. To avoid a corresponding reduction in data throughput or an increase in frequency offset errors, the extra guard tones are inserted without reducing the number of data or pilot tones in the composite channel OFDM symbols, as described for various embodiments.

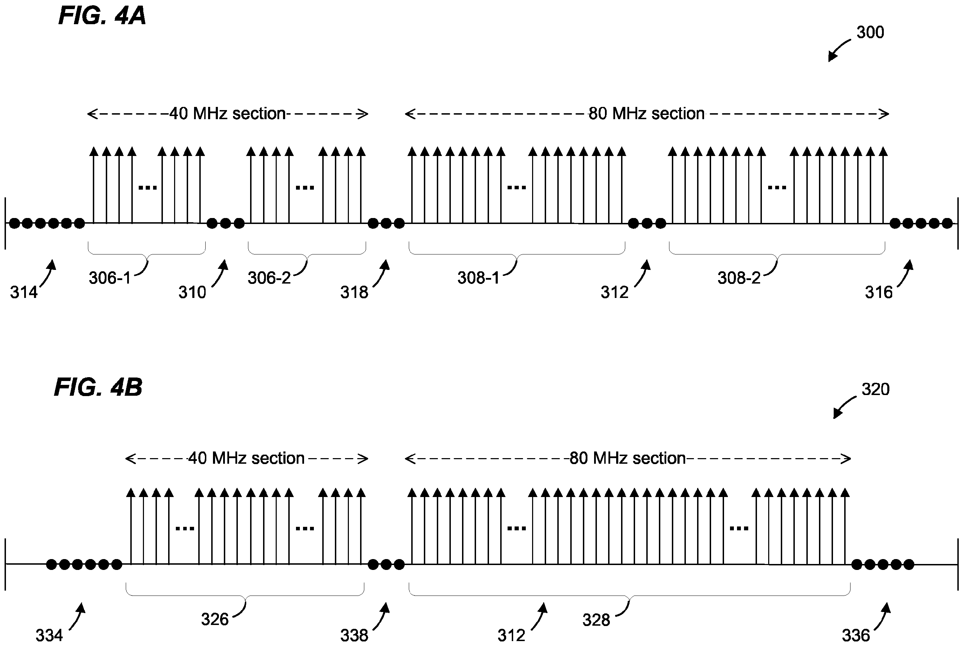

Fig. 4A-4D are diagrams of example composite channel OFDM symbols that are generated utilizing multiple transmit flow units of a PHY processing unit. Referring to Fig. 2, for example, the composite channel OFDM symbols are generated utilizing both the 40 MHz transmit flow unit 124 and the 80 MHz transmit flow unit 126 of the PHY processing unit 100, in an embodiment. In an embodiment, each of the composite channel OFDM symbols of Figs. 4A-4D is generated utilizing 40 and 80 MHz transmit flow units that are also configured to generate the OFDM symbols of Figs. 3A and 3B, respectively.

Referring first to Fig. 4A, the example composite channel OFDM symbol 300 comprises a 40 MHz section of OFDM tones generated by a 40 MHz transmit flow unit and an 80 MHz section of OFDM tones generated by an 80 MHz transmit flow unit. The 40 MHz section includes 57 data and pilot tones 306-1 in a lower sideband of the section and 57 data and pilot tones 306-2 in an upper sideband of the section, in an embodiment. The 80 MHz section includes 121 data and pilot tones 308-1 in a lower sideband of the section and 121 data and pilot tones 308-2 in an upper sideband of the section, in an embodiment. Centered (or approximately centered) within the 40 MHz section are three null tones 310, and centered (or approximately centered) within the 80 MHz section are three null tones 312, in an embodiment.

When transmitting in a 40 or 80 MHz channel using only a single transmit flow unit (e.g., as for the OFDM symbols of Figs. 3A and 3B, respectively), the null tones 310, 312 serve as DC tones for the respective channels. When transmitting in the 120 MHz composite channel, however, the null tones 310, 312 may or may not serve as DC tones, depending on the embodiment. In a first range of embodiments, the 120 MHz OFDM symbol 300 is transmitted using a dual radio transceiver architecture having two separate front end blocks for each spatial stream. For example, in some of these embodiments, a first radio transceiver transmits the 40 MHz section of the 120 MHz channel, and a second radio transceiver transmits the 80 MHz section of the 120 MHz channel. Referring to Fig. 2, for example, separate IDFT units 150, separate DAC units 160, and separate analog and RF units generate OFDM signals for the 40 and 80 MHz sections, in an embodiment. In these embodiments, the null tones 310, 312 generally align with the carrier frequencies of the 40 and 80 MHz sections, respectively, and therefore still serve as DC tones for the composite channel. In a second range of embodiments, the 120 MHz channel OFDM symbol is transmitted using a single radio transceiver architecture for each spatial stream. Because the null tones 310, 312 do not align with the carrier frequency at the center of the 120 MHz channel, the null tones 310, 312 do not serve as DC tones for the composite channel in these embodiments. In some of these embodiments, however, the null tones 310 and 312 are preserved, thereby requiring less modification of the tone mapping as compared to the tone mapping used for 40 and 80 MHz channel OFDM symbols.

In an embodiment, at least six null tones 314 are included at the lower edge of the 40 MHz section, at least five null tones 316 are included at the upper edge of the 80 MHz section, and three null tones 318 are included at the boundary between the 40 and 80 MHz sections. The null tones 318 correspond to tones that, when transmitting in a 40 or 80 MHz channel with a single transmit flow unit, would serve as upper-edge or lower-edge guard tones, respectively. To form the composite channel OFDM symbol 300, these 40 MHz upper-edge and 80 MHz lower-edge guard tones are overlapped and, in some embodiments, reduced in number. For example, five null tones serve as upper-edge guard tones when transmitting in a 40 MHz channel using the 40 MHz transmit flow unit (as in Fig. 3A) and six null tones serve as lower-edge 80 MHz guard tones when transmitting in an 80 MHz channel using the 80 MHz transmit flow unit (as in Fig. 3B), in an embodiment. If these 40 and 80 MHz channel OFDM symbols were merely concatenated to form a composite channel OFDM symbol (i.e., if the tone mapping of the 40 and 80 MHz transmit flow units were not modified), eleven null tones would exist at the boundary between the 40 and 80 MHz sections. In the example composite channel OFDM symbol 300, however, the null tones at the boundary are in effect overlapped and reduced in number to the three null tones 318.

The resulting null tones 318 may or may not serve as DC tones for the composite channel OFDM symbol 300, according to various embodiments. In a first range of embodiments, the time-domain OFDM signal corresponding to the composite channel OFDM symbol 300 is generated using an IDFT size that corresponds to a 120 MHz channel (e.g., a 128 point IDFT for the 40 MHz section and a 256 point IDFT for the 80 MHz section). In these embodiments, the carrier frequency of the OFDM signal falls in the middle of the 120 MHz band, within the 80 MHz section. Thus, in these embodiments, the null tones 318 do not serve as DC tones for the composite channel OFDM symbol 300. In some of these embodiments, the tone mapping of the 80 MHz transmit flow changes for composite channel transmissions such that tones at the center of the 120 MHz band are changed to unused pilot tones. In a second range of embodiments, the time-domain OFDM signal corresponding to the composite channel OFDM symbol 300 is generated using an IDFT size that corresponds to a 160 MHz channel (e.g., a 512 point IDFT on the entire set of tones of the symbol 300). By appropriately placing zero tones around the 40 and 80 MHz sections, the boundary between the 40 and 80 MHz sections is positioned at the center of the 160 MHz signal. Thus, the null tones 318 serve as DC tones in this embodiment.

By reducing the number of null tones at the boundary between the 40 and 80 MHz sections of the composite channel OFDM symbol 300 as discussed above, it is possible to increase the number of guard tones at the upper and/or lower edge of the symbol 300 (e.g., beyond the number of guard tones generated at those edges when the 40 and 80 MHz transmit flows generate 40 and 80 MHz channel OFDM symbols, respectively) without increasing the overall number of tones or the composite channel bandwidth, and without reducing the number of data and pilot tones, in some embodiments. For example, the number of lower-edge guard tones 314 is increased from six to fourteen, in an embodiment. As another example, the number of upper-edge guard tones 316 is increased from five to thirteen, in an embodiment. In yet another example, the number of lower-edge guard tones 314 is increased from six to ten and the number of upper-edge guard tones 316 is increased from five to nine, in an embodiment. In other embodiments, the number of lower-edge guard tones 314 is more than six and/or the number of upper-edge guard tones 316 is more than five.

According to some embodiments where a 40 MHz transmit flow unit is used to generate a lower frequency section of the OFDM symbol 300 and an 80 MHz transmit flow unit is used to generate a higher frequency section of the OFDM symbol 300, the number of guard tones 314 and/or the number of guard tones 316 of the symbol 300 satisfy one or more of the following equations:

$$N_{LSBGT\_120} + N_{USBGT\_120} > N_{LSBGT\_40} + N_{USBGT\_80}; \qquad \text{(Equation 1)}$$

$$N_{LSBGT\_120} + N_{USBGT\_120} = N_{LSBGT\_40} + N_{USBGT\_80} + (N_{USBGT\_40} + N_{LSBGT\_80} - N_{NT\_120});$$

$$\text{(Equation 2)}$$

$$N_{LSBGT\_120} > N_{LSBGT\_40}; \qquad\qquad \text{(Equation 3)}$$

$$N_{LSBGT\_120} = N_{LSBGT\_40} + (N_{USBGT\_40} + N_{LSBGT\_80} - N_{NT\_120}); \qquad\qquad \text{(Equation 4)}$$

$$N_{USBGT\_120} > N_{USBGT\_80}; \qquad\qquad \text{(Equation 5)}$$

$$N_{USBGT\_120} = N_{USBGT\_80} + (N_{USBGT\_40} + N_{LSBGT\_80} - N_{NT\_120}); \qquad\qquad \text{(Equation 6)}$$

$$N_{LSBGT\_120} > \max (N_{LSBGT\_40}, N_{LSBGT\_80}); \qquad\qquad \text{(Equation 7)}$$

or

$$N_{USBGT\_120} > \max (N_{USBGT\_40}, N_{USBGT\_80}), \qquad\qquad \text{(Equation 8)}$$

where:

$N_{LSBGT\_120}$ is the number of guard tones at the lower edge of the 120 MHz OFDM symbol 300,

$N_{USBGT\_120}$ is the number of guard tones at the upper edge of the 120 MHz OFDM symbol 300,

$N_{LSBGT\_40}$ is the number of guard tones at the lower edge of a 40 MHz OFDM symbol generated by the 40 MHz transmit flow unit when in a 40 MHz transmit mode (e.g., the number of guard tones 238-1 of symbol 200 of Fig. 3A),

$N_{USBGT\_40}$ is the number of guard tones at the upper edge of a 40 MHz OFDM symbol generated by the 40 MHz transmit flow unit when in a 40 MHz transmit mode (e.g., the number of guard tones 238-2 of symbol 200 of Fig. 3A),

$N_{LSBGT\_80}$ is the number of guard tones at the lower edge of an 80 MHz OFDM symbol generated by the 80 MHz transmit flow unit when in an 80 MHz transmit mode (e.g., the number of guard tones 248-1 of symbol 220 of Fig. 3B),

$N_{USBGT\_80}$ is the number of guard tones at the upper edge of an 80 MHz OFDM symbol generated by the 80 MHz transmit flow unit when in an 80 MHz transmit mode (e.g., the number of guard tones 248-2 of symbol 220 of Fig. 3B), and

$N_{NT\_120}$ is the number of null tones 318 at the boundary between the 40 and 80 MHz sections of the 120 MHz OFDM symbol 300.

In some embodiments, the number of guard tones according to Equations 1-8 above refers only to the number of guard tones within the 120 MHz channel. For example, while an IDFT corresponding to a 160 MHz channel (e.g., a 512 point IDFT) may be used to generate a 120 MHz OFDM signal as described above, with the unused tones outside the 120 MHz channel set to zero, those additional zero/null tones are not considered to be "guard tones" for purposes of Equations 1-8.

While the example composite channel OFDM symbol 300 includes three null tones 318 at the boundary between the 40 and 80 MHz sections, other embodiments include more or less null tones at the boundary. In some embodiments, the number of null tones at the boundary is between one and eleven. In some embodiments, the number of null tones at the boundary is between one and ten. In some embodiments, where a first transmit flow unit corresponding to a first channel bandwidth is utilized to generate lower frequency tones of a composite channel OFDM symbol and a second transmit flow unit corresponding to a second channel bandwidth is utilized to generate higher frequency tones of a composite channel OFDM symbol, the number of null tones at the boundary is any number less than the sum of i) the number of upper-edge guard tones generated by the first transmit flow unit when generating an OFDM symbol to be transmitted in the first channel bandwidth and ii) the number of lower-edge guard tones generated by the second transmit flow unit when generating an OFDM symbol to be transmitted in the second channel bandwidth.

In some embodiments, the component channel sections of the composite channel OFDM symbol 300 are arranged in a different order. For example, the 80 MHz transmit flow unit generates tones for the lower frequency section of the symbol 300 and the 40 MHz transmit flow unit generates tones for the higher frequency section of the symbol 300, in an embodiment. Moreover, more than two transmit flow units are utilized to generate the composite channel OFDM symbol 300, in some embodiments. For example, the 120 MHz OFDM symbol 300 is formed utilizing three transmit flow units each corresponding to a 40 MHz channel bandwidth, in an embodiment. Further, the composite channel bandwidth of the symbol 300 is less than or greater than 120 MHz, in some embodiments. For example, the composite channel bandwidth is 60 MHz (utilizing, for example, 20 and 40 MHz transmit flow units), in an embodiment. As another example, the composite channel bandwidth is 160 MHz (utilizing, for example, two 80 MHz transmit flow units), in an embodiment. Examples of composite channels and rules for forming the composite channels are described in U.S. Patent Application Nos. 13/034,409 (filed February 24, 2011) and 13/246,351 (filed September 27, 2011). Some of Equations 1-8 may be modified according to these different embodiments. For example, Equations 3 and 5 may be changed to $N_{LSBGT\_120} > N_{LSBGT\_80}$ and $N_{USBGT\_120} > N_{USBGT\_40}$, respectively, for an embodiment where the 80 MHz section of the composite channel OFDM symbol 300 occupies the lower rather than the upper frequency portion of the symbol 300.

Referring next to Fig. 4B, the example composite channel OFDM symbol 320 is the same as or similar to (and is generated in the same or a similar manner as) the symbol 300, in some embodiments, with the exception that the symbol 320 excludes the null tones 310 and 312 corresponding to the DC tones of the 40 and 80 MHz transmit flow units, respectively, and (in some embodiments) includes additional lower-edge and/or upper-edge guard tones.

The 40 MHz of the composite channel OFDM symbol 320 section includes 114 data and pilot tones 326 (i.e., 57 lower sideband tones and 57 upper sideband tones) and the 80 MHz section includes 242 data and pilot tones 328 (i.e., 121 lower sideband tones and 121 upper sideband tones), in an embodiment. In an embodiment, at least six null tones 334 are included at the lower edge of the 40 MHz section, at least five null tones 336 are included at the upper edge of the 80 MHz section, and three null tones 338 are included at the boundary between the 40 and 80 MHz sections. As described above with respect to the composite channel OFDM symbol 300, the reduced number of null tones at the boundary permits an increase in the number of guard tones at the upper and/or lower edge of the composite channel OFDM symbol 320, without increasing the overall number of tones or the composite channel bandwidth, and without reducing the number of data and pilot tones, in some embodiments. Accordingly, the number of lower-edge guard tones 334 and/or upper edge guard tones 336 satisfies one or more of Equations 1-8 above, in some embodiments, with the exception that the definitions of $N_{LSBGT\_120}$, $N_{USBGT\_120}$, and $N_{NT\_120}$ each reference OFDM symbol 320 rather than OFDM symbol 300, and the definition of $N_{NT\_120}$ references the null tones 338 rather than the null tones 318.

By additionally removing the null tones from the center of the 40 and 80 MHz sections (e.g., removing tones 310 and 312 in symbol 300 of Fig. 4A), it is possible to further increase the number of guard tones at the upper and/or lower edges of the composite channel OFDM symbol 320 (as compared to the symbol 300 of Fig. A), still without increasing the overall number of tones or the composite channel bandwidth, and still without reducing the number of data and pilot tones. As examples, the number of lower-edge guard tones 334 is increased by an additional six guard tones, the number of upper-edge guard tones 336 is increased by an additional six guard tones, or the number of lower-edge guard tones 334 and the number of upper-edge guard tones 336 are each increased by an additional three guard tones, according to various embodiments. In an embodiment, the total number of lower-edge and upper-edge guard tones 334, 336 is increased by six.

According to some embodiments where a 40 MHz transmit flow unit is used to generate a lower frequency section of the OFDM symbol 320 and an 80 MHz transmit flow unit is used to generate a higher frequency section of the OFDM symbol 320, the number of guard tones 334 and/or the number of guard tones 336 of the symbol 330 satisfy one or more of the following equations:

$$N_{LSBGT\_120} + N_{USBGT\_120} > N_{LSBGT\_40} + N_{USBGT\_80} + (N_{DC\_40} + N_{DC\_80}); \qquad \text{(Equation 9)}$$

$$N_{LSBGT\_120} + N_{USBGT\_120} = N_{LSBGT\_40} + N_{USBGT\_80} + (N_{USBGT\_40} + N_{LSBGT\_80} - N_{NT\_120})$$
$$+ (N_{DC\_40} + N_{DC\_80}); \qquad \text{(Equation 10)}$$

$$N_{LSBGT\_120} > N_{LSBGT\_40} + (N_{DC\_40} + N_{DC\_80}); \qquad \text{(Equation 11)}$$

$$N_{LSBGT\_120} = N_{LSBGT\_40} + (N_{USBGT\_40} + N_{LSBGT\_80} - N_{NT\_120}) + (N_{DC\_40} + N_{DC\_80});$$

(Equation 12)

$$N_{USBGT\_120} > N_{USBGT\_80} + (N_{DC\_40} + N_{DC\_80});$$ (Equation 13)

$$N_{USBGT\_120} = N_{USBGT\_80} + (N_{USBGT\_40} + N_{LSBGT\_80} - N_{NT\_120}) + (N_{DC\_40} + N_{DC\_80});$$

(Equation 14)

$$N_{LSBGT\_120} > \max(N_{LSBGT\_40}, N_{LSBGT\_80}) + (N_{DC\_40} + N_{DC\_80});$$ (Equation 15)

or

$$N_{USBGT\_120} > \max(N_{USBGT\_40}, N_{USBGT\_80}) + (N_{DC\_40} + N_{DC\_80}),$$ (Equation 16)

where $N_{LSBGT\_40}$, $N_{USBGT\_40}$, $N_{LSBGT\_80}$, and $N_{USBGT\_80}$ are defined as above for Equations 1-8, and where:

$N_{LSBGT\_120}$ is the number of guard tones at the lower edge of the 120 MHz OFDM symbol 320,
$N_{USBGT\_120}$ is the number of guard tones at the upper edge of the 120 MHz OFDM symbol 320,
$N_{NT\_120}$ is the number of null tones 338 at the boundary between the 40 and 80 MHz sections of the 120 MHz OFDM symbol 320,
$N_{DC\_40}$ is the number of null tones at the center of a 40 MHz OFDM symbol generated by the 40 MHz transmit flow unit when in a 40 MHz transmit mode (e.g., the number of DC tones 234 of symbol 200 of Fig. 3A), and
$N_{DC\_80}$ is the number of null tones at the center of an 80 MHz OFDM symbol generated by the 80 MHz transmit flow unit when in an 80 MHz transmit mode (e.g., the number of DC tones 244 of symbol 220 of Fig. 3B).

In some embodiments, the time-domain OFDM signal corresponding to the composite channel OFDM symbol 320 is generated using an IDFT size that corresponds to a 160 MHz channel (e.g., a 512 point IDFT on the entire set of tones of the symbol 320). By appropriately placing zero tones around the 40 and 80 MHz sections, the boundary between the 40 and 80 MHz sections is positioned at the center of the 160 MHz signal. Thus, the null tones 338 serve as DC tones in this embodiment.

In some embodiments, the number of guard tones according to the Equations 9-16 above refers only to the number of guard tones within the 120 MHz channel. For example, while an IDFT corresponding to a 160 MHz channel (e.g., a 512 point IDFT) may be used to generate a 120 MHz OFDM signal as described above, and the unused tones outside the 120 MHz channel set to zero, those additional zero/null tones are not considered to be "guard tones" for purposes of Equations 9-16.

As discussed above in connection with the OFDM symbol 300 of Fig. 4A, the composite channel OFDM symbol 320 includes more or less than the three null tones 338, the component channels/sections of the symbol 320 are arranged in a different order, more than two transmit flow units are utilized to generate the symbol 320, and/or the composite channel bandwidth of the symbol 320 is less than or greater than 120 MHz, in various other embodiments. Some of Equations 1-16 may be modified to account for these different embodiments. For example, Equations 3 and 5 may be changed to $N_{LSBGT\_120} > N_{LSBGT\_80}$ and $N_{USBGT\_120} > N_{USBGT\_40}$, respectively, for an embodiment where the 80 MHz section of the composite channel OFDM symbol 320 occupies the lower rather than the upper frequency portion of the symbol 320.

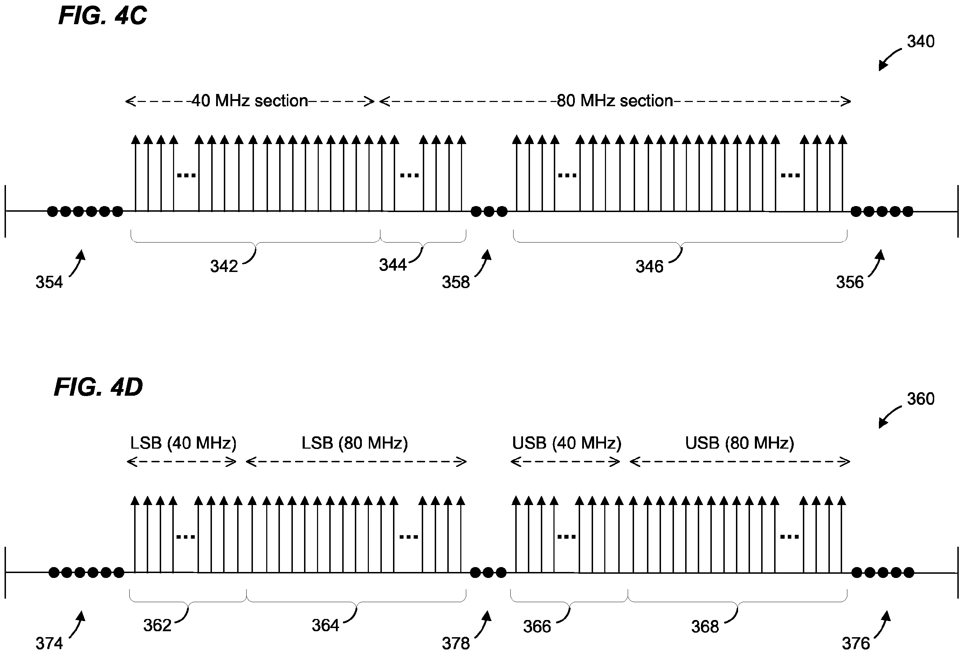

The example composite channel OFDM symbols of Figs. 4C and 4D eliminate all null tones from the boundary between the 40 and 80 MHz sections, and insert null tones at the center of the 120 MHz composite channel to serve as DC tones. Referring first to Fig. 4C, the example composite channel OFDM symbol 340 comprises a 40 MHz section of OFDM tones generated by a 40 MHz transmit flow unit and an 80 MHz section of OFDM tones generated by an 80 MHz transmit flow unit. The 40 MHz section includes 114 data and pilot tones 342, in an embodiment. The 80 MHz section includes 64 data and pilot tones 344 in a lower sideband that falls below the center frequency of the 120 MHz channel, and 178 data and pilot tones 346 in an upper sideband, in an embodiment.

In an embodiment, at least six null tones 354 are included at the lower edge of the 40 MHz section, at least five null tones 356 are included at the upper edge of the 80 MHz section, and three null tones 358 are included at the center of the 120 MHz channel. In some embodiments, the time-domain OFDM signal corresponding to the composite channel OFDM symbol 340 is generated using an IDFT size that corresponds to a 120 MHz channel (e.g., a 128 point IDFT for the 40 MHz section and a 256 point IDFT for the 80 MHz section). In these embodiments, the carrier frequency of the OFDM signal falls in the middle of the 120 MHz band, within the 80 MHz section. Thus, in these embodiments, the null tones 358 serve as DC tones for the composite channel OFDM symbol 340.

By including the three null tones 358 acting as DC tones for the OFDM symbol 340, while removing the null tones corresponding to DC tones for the individual 40 and 80 MHz component channels, additional tones are available for use as upper-edge and/or lower-edge guard tones. Thus, in some embodiments, the OFDM symbol 340 includes additional upper-edge and/or lower-edge guard tones. In various embodiments, one or more of Equations 1-16 above are satisfied for the OFDM symbol 340, with the exception that $N_{LSBGT\_120}$ is the number of guard tones at the lower edge of the 120 MHz OFDM symbol 340, $N_{USBGT\_120}$ is the number of guard tones at the upper edge of the 120 MHz OFDM symbol 340, and $N_{NT\_120}$ is the number of null tones 358 at the center of the 120 MHz OFDM symbol 340.

While the composite channel OFDM symbol 340 includes three null tones 358 at the center of the 120 MHz channel, other embodiments include more or less null tones at the channel center. In some embodiments, the number of null tones at the composite channel center is between one and eleven. In some embodiments, the number of null tones at the composite channel center is between one and ten. In some embodiments, where a first transmit flow unit corresponding to a first channel is utilized to generate a first set of tones of the composite channel OFDM symbol 340 and a second transmit flow unit corresponding to a second channel is utilized to generate a second set of tones of the composite channel OFDM symbol 340, the number of null tones at the composite channel center is any number less than the lesser of: (A) the sum of i) the number of upper-edge guard tones generated by the first transmit flow unit when generating an OFDM symbol to be transmitted in the first channel and ii) the number of lower-edge guard tones generated by the second transmit flow unit when generating an OFDM symbol to be transmitted in the second channel; and (B) the sum of i) the number of lower-edge guard tones generated by the first transmit flow unit when generating an OFDM symbol to be transmitted in the first channel and ii) the number of upper-edge guard tones generated by the second transmit flow unit when generating an OFDM symbol to be transmitted in the second channel.

As discussed above in connection with the OFDM symbol 300 of Fig. 4A, the component channels/sections of the OFDM symbol 340 are arranged in a different order, more than two transmit flow units are utilized to generate the symbol 340, and/or the composite channel bandwidth of the symbol 340 is less than or greater than 120 MHz, in various other embodiments. Some of Equations 1-16 may be modified according to these different embodiments. For example, Equations 3 and 5 may be changed to $N_{LSBGT\_120} > N_{LSBGT\_80}$ and $N_{USBGT\_120} > N_{USBGT\_40}$, respectively, for an embodiment where the 80 MHz section of the composite channel OFDM symbol 340 occupies a lower rather than an upper frequency portion of the symbol 340.

Referring next to Fig. 4D, the example composite channel OFDM symbol 360 is the same as or similar to (and is generated in the same or a similar manner as) the symbol 340, in some embodiments, with the exception that the symbol 360 interleaves blocks of the 40 and 80 MHz sections generated by the 40 and 80 MHz transmit flow units, respectively, to provide increased frequency diversity. The composite channel OFDM symbol 340 comprises a 40 MHz section of OFDM tones generated by a 40 MHz transmit flow unit and an 80 MHz section of OFDM tones generated by an 80 MHz transmit flow unit. In order from lowest to highest frequency, the example OFDM symbol 360 includes 57 data and pilot tones 362 from the lower sideband of a 40 MHz section that is generated by a 40 MHz transmit flow unit, 121 data and pilot tones 364 from the lower sideband of an 80 MHz section that is generated by an 80 MHz transmit flow unit, 57 data and pilot tones 366 from the upper sideband of the 40 MHz section, and 121 data and pilot tones 368 from the upper sideband of the 80 MHz section, in an embodiment.

The tones of the OFDM symbol 360 may be interleaved in a different manner than that shown in Fig. 4D, according to various embodiments. In some embodiments, the upper and lower sideband portions of the 40 and 80 MHz sections are in a different order. For example, possible orders (from lowest to highest index/frequency) include {80 MHz LSB, 40 MHz LSB, DC tones, 80 MHz USB, 40 MHz USB}, {80 MHz LSB, 40 MHz LSB, DC tones, 40 MHz USB, 80 MHz USB}, {40 MHz LSB, 80 MHz LSB, DC tones, 80 MHz USB, 40 MHz USB}, and {40 MHz LSB, 80 MHz LSB, DC tones, 40 MHz USB, 80 MHz USB}, according to various embodiments. In some embodiments, the interleaved blocks are of different sizes (i.e., more or less tones). In some embodiments, three or more blocks of tones for each of the 40 and 80 MHz sections are interleaved.

In an embodiment, at least six null tones 374 are included at the lower edge of the 120 MHz channel, at least five null tones 376 are included at the upper edge of the 120 MHz channel, and three null tones 378 are included at the center of the 120 MHz channel. By including only the three null tones 378 acting as DC tones for the OFDM symbol 360, additional tones are available for use as upper-edge and/or lower-edge guard tones.

In various embodiments, one or more of Equations 1-16 above are satisfied for the OFDM symbol 360, with the exception that $N_{LSBGT\_120}$ is the number of guard tones at the lower edge of the 120 MHz OFDM symbol 360, $N_{USBGT\_120}$ is the number of guard tones at the upper edge of the 120 MHz OFDM symbol 360, and $N_{NT\_120}$ is the number of null tones 378 at the center of the 120 MHz OFDM symbol 360.

As discussed above in connection with the OFDM symbol 340 of Fig. 4C, the composite channel OFDM symbol 360 includes more or less than the three null tones 378, the component channels/sections of the symbol 360 are arranged in a different order, more than two transmit flow units are utilized to generate the symbol 360, and/or the composite channel bandwidth of the symbol 360 is less than or greater than 120 MHz, in various other embodiments. Some of Equations 1-16 may be modified according to these different embodiments. For example, Equations 3 and 5 may be changed to $N_{LSBGT\_120} > N_{LSBGT\_80}$ and $N_{USBGT\_120} > N_{USBGT\_40}$, respectively, for an embodiment where the 80 MHz section of the composite channel OFDM symbol 360 occupies the lower rather than the upper frequency portion of the symbol 360.

In some embodiments, the example composite channel OFDM symbols 300, 320, 340, 360 of Figs. 4A-4D include still more guard tones at the upper and/or lower edge of the composite channel by reducing the number of pilot tones in the upper and/or lower section of the composite channel (e.g., as compared to the total number of pilot tones inserted by the utilized transmit flow units when generating narrower, component channel OFDM symbols). For example, if the total number of pilot tones in a 40 MHz OFDM symbol and an 80 MHz OFDM symbol is 14 (e.g., 6 pilot tones in the 40 MHz symbol and 8 pilot tones in the 80 MHz symbol), the 120 MHz OFDM symbol includes only 12 pilot tones, 10 pilot tones, or less, according to various embodiments. In some embodiments, one or more of Equations 1-16 (with definitions as modified above) are satisfied, but with the modification that the left side of each equation is increased by the decrease in the number of pilot tones.

The techniques utilized to increase the number of guard tones in the example composite channel OFDM symbols of Figs. 4A-4D may be extended to other embodiments as well. For example, in some embodiments where three 40 MHz transmit flow units are utilized to generate a 120 MHz OFDM symbol, the boundary between each 40 MHz section of the 120 MHz symbol overlaps and/or reduces the number of null tones normally generated by the 40 MHz transmit flow units (e.g., down to a number between zero and 11, or between zero and 10, if the transmit flow units would normally provide 11 null tones at the boundary).

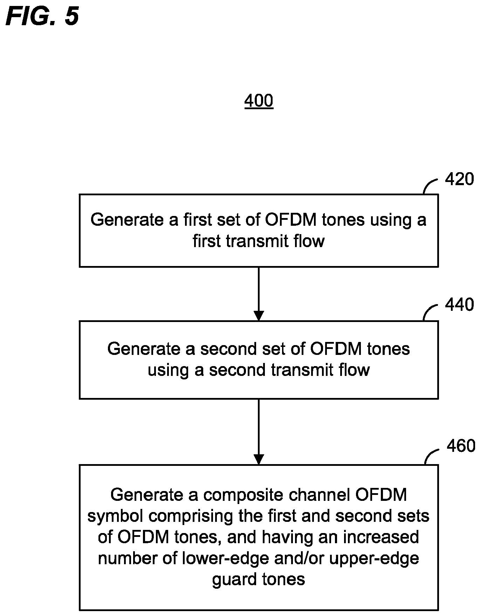

Fig. 5 is a flow diagram of an example method 400 for generating a composite channel OFDM symbol having an increased number of guard tones, according to an embodiment. Referring to Fig. 1, the PHY processing unit 20 of the AP 14 is configured to implement the method 400, in an embodiment. Additionally or alternatively, the PHY processing unit 29 of the client 25-1 is configured to implement the method 400, in an embodiment. In an embodiment, the method 400 is implemented by a PHY processing unit that is the same as or similar to the PHY processing unit 100 of Fig. 2.

At block 420, a first set of OFDM tones is generated using a first transmit flow unit. In an embodiment, the first transmit flow unit corresponds to a particular channel bandwidth, such as the 40 MHz transmit flow unit 124 in the PHY processing unit 100 of Fig. 2. In some embodiments, the first set of generated OFDM tones is the same as or similar to the tones in the 40 MHz section of the OFDM symbol of Fig. 4A, 4B, 4C, or 4D, for example.

At block 440, a second set of OFDM tones is generated using a second transmit flow unit. In an embodiment, the second transmit flow unit corresponds to another particular channel bandwidth, such as the 80 MHz transmit flow unit 126 in the PHY processing unit 100 of Fig. 2. In some embodiments, the channel bandwidth corresponding to the second transmit flow unit is the same as the channel bandwidth corresponding to the first transmit flow unit. In some embodiments, the second set of generated OFDM tones is the same as or similar to the tones in the 80 MHz section of the OFDM symbol of Fig. 4A, 4B, 4C, or 4D, for example.

At block 460, a composite channel OFDM symbol comprising the first and second sets of OFDM tones is generated. In some embodiments, the composite channel has a bandwidth equal or approximately equal to the sum of the channel bandwidths corresponding to the first and second transmit flow units (e.g., 120 MHz when utilizing 40 and 80 MHz transmit flow units). In some embodiments, the composite channel OFDM symbol is the same as or similar to the OFDM symbol of Fig. 4A, 4B, 4C, or 4D, for example.

In an embodiment, the composite channel OFDM symbol generated at block 460 includes an increased number of lower-edge and/or upper-edge guard tones, as compared to the number of lower-edge and/or upper edge guard tones that would be included in the composite symbol if the symbol were merely a concatenation of tones from the OFDM symbols corresponding to the narrower, component channels. In various embodiments, the composite channel OFDM symbol is generated in any one of the ways discussed above in connection with Figs. 4A-4D (e.g., reducing the number of null tones at the boundary of component channel sections, removing null tones at the center of each component channel section, etc.). In some embodiments, the number of lower-edge and/or upper-edge guard tones of the generated OFDM symbol satisfies one or more of Equations 1-16 above.

In some embodiments, the steps of the method 400 occur simultaneously or in a different order. For example, generating a first set of OFDM tones at block 420 occurs at least in part simultaneously with generating a second set of OFDM tones at block 440, in an embodiment. Moreover, in some embodiments, the method 400 includes additional steps. For example, a third set of OFDM tones is generated using a third transmit flow unit, in an embodiment, with the generated composite channel OFDM symbol further comprising the third set of OFDM tones. In some embodiments, the third transmit flow unit corresponds to yet another particular channel bandwidth, such as 40 MHz, 80 MHz, or a different bandwidth. In some embodiments, the channel bandwidth corresponding to the third transmit flow unit is the same as a channel bandwidth corresponding to each of the first and the second transmit flow units. In some embodiments, the third set of generated OFDM tones is the same as or similar to the tones corresponding the 40 MHz or the 80 MHz section of the OFDM symbol of Fig. 4A, 4B, 4C, or 4D, for example.

In addition to the potential need for an increased number of lower-edge and/or upper-edge guard tones as discussed above, various additional design issues can arise when transmitting in a composite channel. Several such design issues, and embodiments addressing those issues, are discussed below with reference to the example embodiment/scenario in which a 120 MHz composite channel is generated utilizing 40 and 80 MHz transmit flow units.

Referring back to Fig. 2, the scrambler 104, encoder parser 106, encoder(s) 108, and stream parser 110 operate in the same manner for the 120 MHz channel as for the 40 and 80 MHz channels corresponding to the utilized transmit flow units 124, 126, in an embodiment. Moreover, the stream parser 110 operates in a similar manner for both the 120 MHz channel and the 40 and 80 MHz channels, with an exception as discussed below.

For the 120 MHz channel, there may be instances in which, for an allowed MCS, $N_{CBPS}/N_{ES}/S$ is not an integer, where $N_{CBPS}$ is the number of coded bits per symbol, $N_{ES}$ is the number of encoders, $S$ is a number of bits to be allocated amongst the $Nss$ streams, $N_{SS}$ x $s$, and $s$ is a number of bits in the block of S bits to be allocated to each stream:

(1) 256QAM, R = 3/4, $N_{SS}$ = 5, $N_{ES}$ = 5,

(2) 256QAM, R = 3/4, $N_{SS}$ = 7, $N_{ES}$ = 7,

(3) 256QAM, R = 3/4, $N_{SS}$ = 8, $N_{ES}$ = 8, and

(4) 256QAM, R = 5/6, $N_{SS}$ = 7, $N_{ES}$ = 8,

where R is the coding rate and $N_{SS}$ is the number of spatial streams.

For cases (1), (2), and (3) above, $N_{CBPS}/N_{ES}$ are multiples of $s$. For these cases, in an embodiment, $S = N_{SS}$ x $s$ bits are taken each time from each BCC encoder and $s$-by-$s$ bits are allocated to $N_{SS}$ streams, with rotation across all BCC encoders. This continues until the last integer block (floor ($N_{CBPS}/N_{ES}/S$)) of $S$ bits at each encoder. If at this point in each OFDM symbol each BCC has $M$ x $s$ ($M < N_{SS}$) residue bits, the last $M$ x $s$ bits in the current OFDM symbol are taken from the first encoder and allocated to the first $M$ spatial streams ($s$ bits to each stream). The last $M$ x $s$ bits in the current OFDM symbol are then taken from the second encoder and distributed among $M$ spatial streams, starting from the ($M$ + 1)-th spatial stream, and so on. The process cycles back to the first spatial stream upon reaching the $N_{SS}$-th spatial stream, and is repeated until all bits are distributed in the current OFDM symbol.

For case (4) above, $N_{CBPS}/N_{ES}$ is not a multiple of $s$. For this case, in an embodiment, the MCS of case (4) is not allowed. In another embodiment, a special rule for the stream parser is defined for the MCS of case (4). The same stream parsing is applied until the last integer block (floor ($N_{CBPS}/N_{ES}/S$)) of $S$ bits at each encoder. At that point, 14 bits remain in each BCC encoder in each OFDM symbol (also note that $s$ = 4 bits). In a first embodiment, the remaining 14 bits from the first BCC encoder output are allocated to the seven streams using 1-bit or 2-bit round robin. Next, the remaining 14 bits from the second BCC encoder output are allocated the same way. The same is repeated until all the bits in all eight encoders are allocated. In a second embodiment, 112 (= 14 x 8) remaining bits from all eight BCC encoders are concatenated (14 bits from the first BCC encoder, 14 from the second BCC encoder, etc.). The first $S$ = 28 (= 7 x 4) bits are taken from this 112-bit sequence and allocated to seven streams $s$ x $s$ bits. Next, the next S bits are continuously taken from this sequence and allocated in the same manner, repeatedly until all the 112 remaining bits are allocated to the seven streams.

Referring again to Fig. 2, each of the frequency parsers 114 parses bits when in a 120 MHz channel mode such that, for each OFDM symbol, $N_{CBPS\_40}/N_{SS}$ bits are allocated to the 40 MHz transmit flow unit 124 for each spatial stream, and $N_{CBPS\_80}/N_{SS}$ bits are allocated to the 80 MHz transmit flow unit 126 for each spatial stream, in an embodiment, where $N_{CBPS\_40}$ is the number of coded bits per symbol for the 40 MHz transmit flow unit, $N_{CBPS\_80}$ is the number of coded bits per symbol for the 80 MHz transmit flow unit, and $N_{SS}$ is the number of spatial streams.

In some embodiments, for each 120 MHz OFDM symbol, $N_{CBPSS}$ bits are grouped together at the output of the stream parser 110, where $N_{CBPSS}$ is the number of coded bits per spatial stream. In a first embodiment, $N_{CBPSS}$ bits are allocated to the 80 and 40 MHz segments by two bits and one bit, respectively, in round-robin fashion (e.g., the first two bits to the 80 MHz segment, than the third bit to the 40 MHz segment, etc.), until the 40 MHz segment is filled up. The remaining 26 x $M$ bits are then allocated to the 80 MHz segment, where M is the number of coded bits per represented by each constellation point (e.g., $M$ = 4 for 16QAM). Note that, in some embodiments, the 80 MHz segment has more than double the number of tones as the 40 MHz segment, and therefore more than double the number of bits per OFDM symbol per stream.

In a second embodiment, $N_{CBPSS}$ bits are allocated to the 80 and 40 MHz segments by 2$s$ bits and $s$ bits, respectively, in round-robin fashion (e.g., the first $2s$ bits to the 80 MHz segment, than the next s bits to the 40 MHz segment, etc.), until the 40 MHz segment is filled up. The remaining 26 x $M$ bits are then allocated to the 80 MHz segment, where $M$ is the number of coded bits per represented by each constellation point. Note again that the 80 MHz segment has more than double the number of bits per OFDM symbol per stream as the 40 MHz segment, and that the 40 Mhz segment always has an integer number of s coded bits per OFDM symbol per stream, in some embodiments.

In a third embodiment, $N_{CBPSS}$ bits are allocated to the 80 and 40 MHz segments by $2s$ x $N_{ES}$ bits and $s$ x $N_{ES}$ bits, respectively, in round-robin fashion (e.g., the first $2s$ x $N_{ES}$ bits to the 80 MHz segment, then the next $s$ x $N_{ES}$ bits to the 40 MHz segment, etc.), until the 40 MHz segment has less than $s$ x $N_{ES}$ bits that are not allocated. If the 40 MHz segment has unallocated bits at this point, the remaining bits are allocated to the 80 and 40 MHz segments by $2s$ and $s$ bits, respectively, in round-robin fashion until the 40 MHz segment is filled up. If the 40 MHz segment does not have any unallocated bits at this point, the remaining 26 x $M$ bits are then allocated to the 80 MHz segment, where $M$ is the number of coded bits represented by each constellation point.

Referring again to Fig. 2, the CSD units (e.g., CSD unit 140) operate differently when transmitting in a composite channel mode, in some embodiments. Typically, the frequency-domain CSD values (i.e., phase shifts) are relative to a carrier frequency. For example, a phase shift at the IDFT tone index $k$ is $\theta_k(i_{STS}) = -2\pi k\Delta_F T_{CS,VHT}(i_{STS})$, in an embodiment, where $\Delta_F$ is the actual frequency of the current tone minus the carrier frequency, $i_{STS}$ is a space-time stream index, and $T_{CS,VHT}(i_{STS})$ is is a cyclic shift for the stream. Thus, the 120 MHz transmit flow units (e.g., 40 and 80 MHz transmit flow units) must define which tone acts as the "carrier frequency" for purposes of determining CSD phase shifts, in an embodiment. For example, a tone at the boundary of the 40 and 80 MHz sections is considered to be at the "carrier frequency" for purposes of determining CSD phase shifts, in an embodiment. As another example, a tone at the middle of the 120 MHz channel is considered to be at the "carrier frequency" for purposes of determining CSD phase shifts, in an embodiment.

In some embodiments, one or more exclusion rules for allowable MCSs apply when transmitting using the 120 MHz composite channel. In an embodiment, an MCS is only allowed if $N_{CBPS}$ and $N_{DBPS}$ (per encoder) are integers assuming a BCC encoder (i.e., both $N_{CBPS}/N_{ES}$ and $N_{DBPS}/N_{ES}$ are integers), where $N_{DBPS}$ is the number of data bits per symbol. In an embodiment, joint encoding is used for the 120 MHz channel, and the following condition must be satisfied:

$$\text{mod}(N_{CBPS}/N_{ES}, D_R) = 0, \text{ where coding rate R} = N_R/D_R \text{ (i.e., } D_R = 2 \text{ if } R = 1/2, 3 \text{ if } R = 2/3, 4 \text{ if } R = 3/4, \text{ or } 6 \text{ if } R = 5/6).$$

The same allowed and excluded MCSs are used when using LDPC encoding for the 120 MHz channel, in an embodiment. Based on this exclusion rule, the following MCSs are excluded for 120 MHz: {16QAM, 3/4, $N_{SS}$ = 7}, {64QAM, 2/3, $N_{SS}$ = 7}, {64QAM, 3/4, $N_{SS}$ = 5}, {64QAM, 3/4, $N_{SS}$ = 6}, {64QAM, 3/4, $N_{SS}$ = 7}, {64QAM, 5/6, $N_{SS}$ = 4}, {64QAM, 5/6, $N_{SS}$ = 5}, {64QAM, 5/6, $N_{SS}$ = 6}, {64QAM, 5/6, $N_{SS}$ = 8}, {256QAM, 5/6, $N_{SS}$ = 4}, {256QAM, 5/6, $N_{SS}$ = 6}, and {256QAM, 5/6, $N_{SS}$ = 8}. Example allowed MCSs and exclusion rules are discussed in more detail in U.S. Patent Application No. 13/231,670 (filed September 13, 2011), which is hereby incorporated by reference herein in its entirety.

For some embodiments where LDPC encoding is used in place of BCC encoding, the encoder parser 106 and encoders 108 are replaced with a single LDPC encoder. Moreover, in some of these embodiments, an LDPC tone mapper is included in each path of each transmit flow unit (e.g., between the QAM modulator 134-1 and the tone mapper 136-1) to provide LDPC-specific tone mapping.

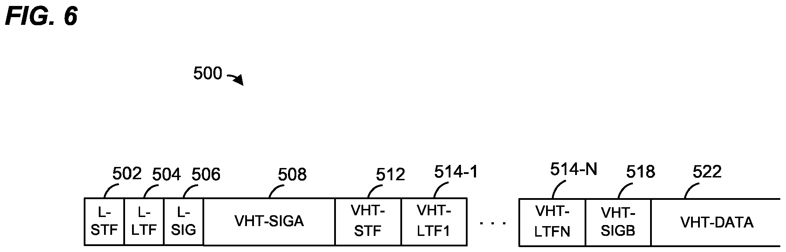

In some embodiments, data units for composite channel OFDM symbols conforming to a first communication protocol (e.g., a VHT protocol) include a preamble having a portion corresponding to the first communication protocol and a "legacy" portion corresponding to a second communication protocol. Fig. 6 is a diagram of an example data unit 500 that the AP 14 of Fig. 1 is configured to transmit to the client station 25-1, according to an embodiment. In an embodiment, the client station 25-1 is also configured to transmit data units of the format of Fig. 6 to the AP 14. The data unit 500 includes a preamble having a legacy short training field (L-STF) field 502, a legacy long training field (L-LTF) field 504, a legacy signal field (L-SIG) field 506, a first very high throughput signal field (VHT-SIGA) 508, a very high throughput short training field (VHT-STF) 512, $N$ very high throughput long training fields (VHT-LTFs) 514, where $N$ is an integer, and a second very high throughput signal field (VHT-SIGB) 518. The data unit 500 also includes a very high throughput data portion (VHT-DATA) 522. The data portion 522 includes service bits and information bits (not shown).

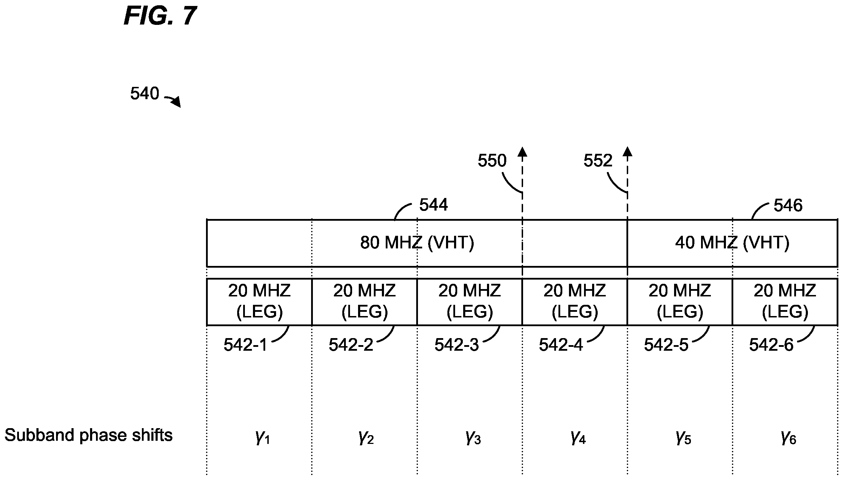

In an example embodiment, a preamble for a data unit transmitted via a composite channel includes a legacy portion comprising duplicate subbands, and a non-legacy portion composed of sections corresponding to the utilized transmit flow units. Fig. 7 is a frequency-domain diagram of an example preamble 540 with legacy and non-legacy portions for a data unit such as the data unit 500 of Fig. 6. In the embodiment illustrated in Fig. 7, the six duplicate, 20 MHz legacy portions 542 are followed by an 80 MHz VHT portion 544 and a 40 MHz VHT portion 546. In one embodiment, the tone mapping of the VHT portion is such that a carrier frequency 550 falls at the boundary of the 80 and 40 MHz sections 544, 546 (e.g., three DC tones are inserted at the boundary, as in the example OFDM symbol 300 or 320 of Fig. 4A or 4B). In another embodiment, the tone mapping of the VHT portion is such that a carrier frequency 552 falls at the center of the 120 MHz composite channel formed by the 80 and 40 MHz sections (e.g., three DC tones are inserted at the center, as in the example OFDM symbol 340 or 360 of Fig. 4C or 4D). In both of these two embodiments, the carrier frequency aligns with a boundary of two of the 20 MHz legacy portions 542 (e.g., 542-3 and 542-4 for carrier frequency 550, and 542-4 and 542-5 for carrier frequency 552). In some embodiments where guard tones and/or DC tones of the component channel (e.g., 40 and 80 MHz) sections are removed and/or overlapped, the legacy portions 542 in combination occupy a larger bandwidth than the VHT portions 544, 546.

In some embodiments, one or both of the legacy and non-legacy portions of the composite channel preamble apply rotation factors to reduce the peak-to-average power ratio (PAPR) of the transmitted OFDM signal. In the example embodiment of Fig. 7, subband phase shifts (rotation factors) $\gamma_1$ through $\gamma_6$ are applied to the six 20 MHz legacy portions 542-1 through 542-6, respectively. In an embodiment, the phase shifts $\gamma_1$ through $\gamma_6$ are also applied to six 20 MHz sections of the non-legacy preamble portion (e.g., four 20 MHz subbands within the 80 MHz VHT portion 544 and two 20 MHz subbands within the 40 MHz VHT portion 546).

In some embodiments, all subcarriers that are located (after any tone ordering/interleaving) within a particular subband (e.g., a particular 20 MHz subband) should apply (i.e., be multiplied by) a particular phase shift factor $\gamma_i$, where $i$ is the index number of the subband. Any $\gamma$ factor combination may be used. For example, for $i$ = 1 to 6 as in Fig. 7, $\gamma$ = [1 -1 -1 -1 1 j], $\gamma$ = [1 j 1 -1 -1 -1], etc., in various embodiments.

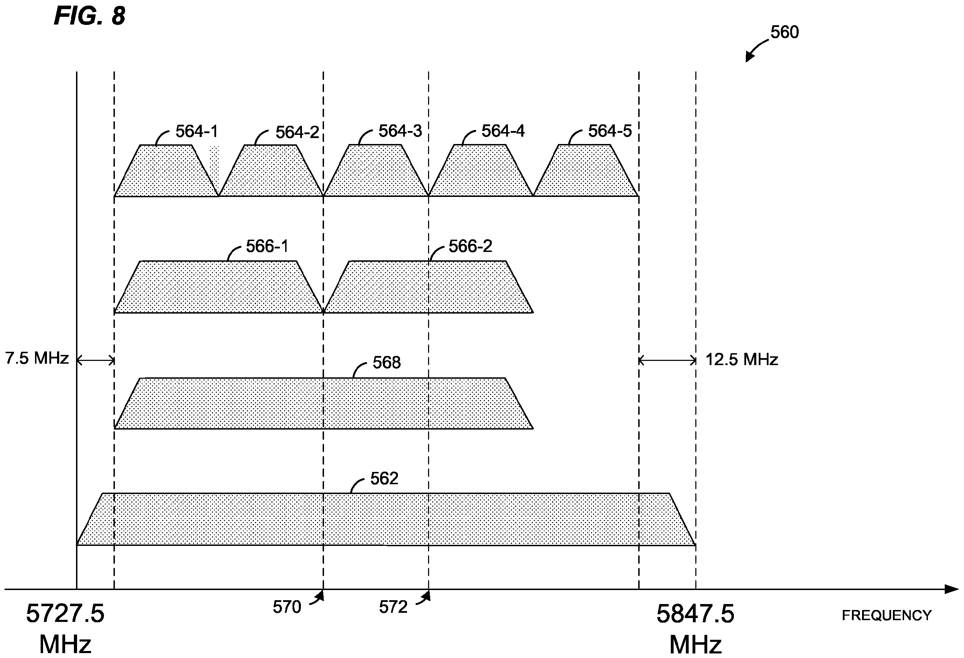

Additional design issues may arise in certain scenarios where the frequency location of a composite channel (e.g., a 120 MHz channel) is not aligned relative to the frequency location of component channels (e.g., 40 or 80 MHz channels). Referring to the channelization diagram 560 of Fig. 8, for example, a 120 MHz channel 562 currently being considered for use in a 5725-5850 MHz Chinese band for IEEE 802.11 communications does not align with (i.e., is not coextensive in frequency with concatenations of) 20, 40, and 80 MHz channels 564, 566, and 568 that are used for IEEE 802.11 communications in the United States. In addition to the potential issues with band gaps between the 120 MHz channel 562 and the limits of the 125 MHz Chinese band (as discussed above), the alignment between the 120 MHz Chinese channel and 20, 40 and 80 MHz United States channels can require a change in carrier frequency when changing to a Chinese 120 MHz transmission mode from a 20, 40, or 80 MHz transmission mode (or vice versa). Physically changing the carrier frequency (i.e., changing the frequency of a local oscillator (LO) that generates the carrier frequency) can introduce relatively large, undesired delays.

In a first example embodiment, switching of the carrier/LO frequency is avoided by mapping the DC tones of the OFDM symbol (e.g., the tones 318, 338, 358, and 378 of the symbols in Figs. 4A-4D) to a frequency 570 that is the center of the 80 MHz channel 568. In a second example embodiment, physical changing of the carrier/LO frequency is avoided by mapping the DC tones of the OFDM symbol to a frequency 572 that is the center of the 40 MHz channel 566-2.

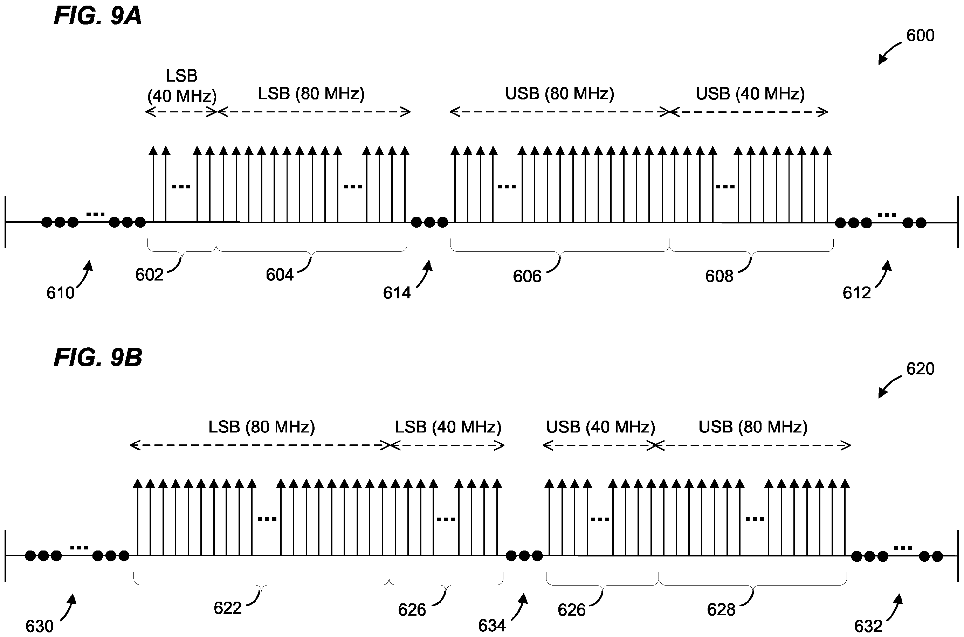

In the first example embodiment (i.e., using the 80 MHz center frequency), mapping the DC tones to the frequency 570 of Fig. 8 results in imbalanced tone mapping around the DC tones, such as the tone mapping shown in the example composite channel OFDM symbol 600 of Fig. 9A. The OFDM symbol 600 is similar to the symbol 360 of Fig. 4D, in some embodiments, but does not include DC tones at the 120 MHz channel center. Like the symbol 360, the OFDM symbol 600 comprises a 40 MHz section of OFDM tones generated by a 40 MHz transmit flow unit and an 80 MHz section of OFDM tones generated by an 80 MHz transmit flow unit. In order from lowest to highest frequency, the example OFDM symbol 600 includes 16 data and pilot tones 602 from a relatively narrow lower sideband of a 40 MHz section that is generated by a 40 MHz transmit flow unit, 121 data and pilot tones 604 from the lower half sideband of an 80 MHz section that is generated by an 80 MHz transmit flow unit, 121 data and pilot tones 606 from the upper half sideband of the 80 MHz section, and 98 data and pilot tones 608 from a relatively wide upper sideband of the 40 MHz section, in an embodiment. For this first embodiment, any tone mapping is possible so long as the DC tones are aligned with the center frequency of the 80 MHz channel. For example, possible orders (from lowest to highest index/frequency) include {80 MHz LSB (half), 40 MHz LSB (narrower), DC tones, 80 MHz USB (half), 40 MHz USB (wider)}, {80 MHz LSB (half), 40 MHz LSB (narrower), DC tones, 40 MHz USB (wider), 80 MHz USB (half)}, and {40 MHz LSB (narrower), 80 MHz LSB (half), DC tones, 40 MHz LSB (wider), 80 MHz LSB (half)}, according to various embodiments. In some embodiments, three or more blocks of tones for each of the 40 and 80 MHz sections are interleaved. In an embodiment, the pilot tone position in each of the 80 MHz sidebands and/or each of the 40 MHz sidebands of the 120 MHz OFDM symbol is unchanged from when the corresponding transmit flow units generate 80 and/or 40 MHz OFDM symbols, respectively. In another embodiment, the position of the 120 MHz pilots is rearranged to be evenly or approximately evenly distributed across the 120 MHz channel.

The example OFDM symbol 600 also includes 13 lower-edge guard tones 610, 12 upper-edge guard tones 612, and three DC tones 614 aligned with the carrier frequency. Other embodiments include more or fewer guard tones 610, 612 and/or more or fewer DC tones 614. To allow the carrier frequency to be offset from the center of the 120 MHz channel, an IDFT size corresponding to a larger channel bandwidth (e.g., a 512 point IDFT corresponding to a 160 MHz channel) is utilized, in an embodiment, with zeros being inserted for the unused tones.

In the second example embodiment (i.e., using the 40 MHz center frequency), mapping the DC tones to the frequency 572 of Fig. 8 likewise results in imbalanced tone mapping around the DC tones, such as the tone mapping shown in the example composite channel OFDM symbol 620 of Fig. 9B. The OFDM symbol 620 is similar to the symbol 360 of Fig. 4D, in some embodiments, but does not include DC tones at the 120 MHz channel center. Like the symbol 360, the OFDM symbol 620 comprises a 40 MHz section of OFDM tones generated by a 40 MHz transmit flow unit and an 80 MHz section of OFDM tones generated by an 80 MHz transmit flow unit. In order from lowest to highest frequency, the example OFDM symbol 620 includes 142 data and pilot tones 622 from a relatively wide lower sideband of an 80 MHz section that is generated by an 80 MHz transmit flow unit, 57 data and pilot tones 624 from the lower half sideband of a 40 MHz section that is generated by a 40 MHz transmit flow unit, 57 data and pilot tones 626 from the upper half sideband of the 40 MHz section, and 100 data and pilot tones 628 from a relatively narrow upper sideband of the 80 MHz section, in an embodiment. For this second embodiment, any tone mapping is possible so long as the DC tones are aligned with the center frequency of the 40 MHz channel. For example, possible orders (from lowest to highest index/frequency) include {80 MHz LSB (wider), 40 MHz LSB (half), DC tones, 80 MHz USB (narrower), 40 MHz USB (half)}, {40 MHz LSB (half), 80 MHz LSB (wider), DC tones, 80 MHz USB (narrower), 40 MHz USB (half)}, and {40 MHz LSB (half), 80 MHz LSB (wider), DC tones, 40 MHz LSB (half), 80 MHz LSB (narrower)}, according to various embodiments. In some embodiments, three or more blocks of tones for each of the 40 and 80 MHz sections are interleaved. In an embodiment, the pilot tone position in each of the 80 MHz sidebands and/or each of the 40 MHz sidebands of the 120 MHz OFDM symbol is unchanged from when the corresponding transmit flow units generate 80 and/or 40 MHz OFDM symbols, respectively. In another embodiment, the position of the 120 MHz pilots is rearranged to be evenly or approximately evenly distributed across the 120 MHz channel.

The example OFDM symbol 620 also includes 13 lower-edge guard tones 630, 12 upper-edge guard tones 632, and three DC tones 634 aligned with the carrier frequency. Other embodiments include more or fewer guard tones 630, 632 and/or more or fewer DC tones 634. To allow the carrier frequency to be offset from the center of the 120 MHz channel, an IDFT size corresponding to a larger channel bandwidth (e.g., a 512 point IDFT corresponding to a 160 MHz channel) is utilized, in an embodiment, with zeros being inserted at the unused tones.

In some embodiments, the preamble of the data unit carrying the OFDM symbol 600 or the OFDM symbol 620 is configured differently than the preamble 540 of Fig. 7, in order to avoid a situation in which the carrier frequency (at the DC tones 614 or the DC tones 634, respectively) falls on useful data or pilot tones of the legacy portion of the preamble. Referring to the channelization of Fig. 8, for example, four or five of the 20 MHz channels 564 are used for the duplicated legacy portion of the preamble, in an embodiment.

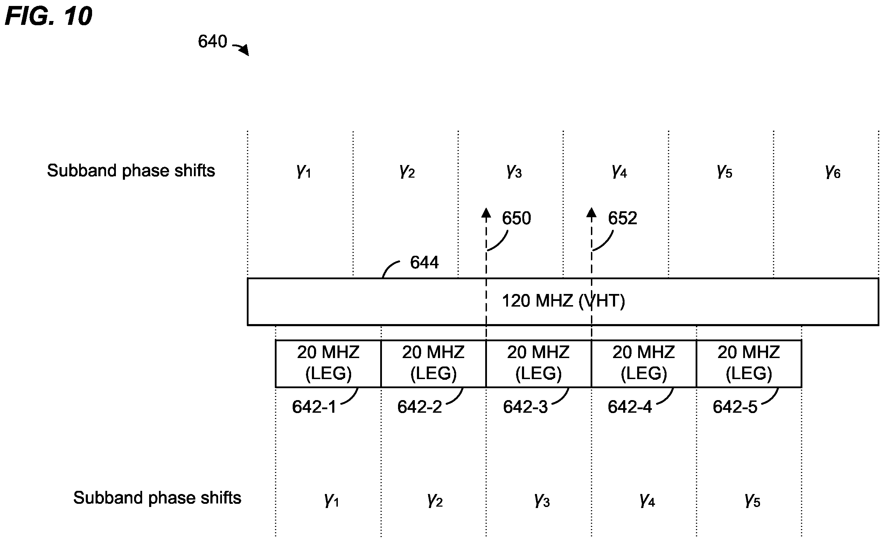

An arrangement of this sort is illustrated in the example preamble 640 of Fig. 10. The example preamble 640 is a preamble of a data unit such as the data unit 500 of Fig. 6, in an embodiment. The example preamble 640 includes five duplicate, 20 MHz legacy portions 642, followed by a 120 MHz VHT portion 644. In some embodiments where the 120 MHz channel carrier frequency aligns with the 80 MHz center frequency (as discussed above), the tone mapping of the VHT portion is such that a carrier frequency 650 falls at the boundary between the 20 MHz legacy portion sections 642-2 and 642-3. Thus, the offset of the duplicate 20 MHz legacy portion of the preamble prevents the carrier frequency from falling within any legacy 20 MHz section. In some embodiments where the 120 MHz channel carrier frequency aligns with the 40 MHz center frequency (also as discussed above), the tone mapping of the VHT portion is such that a carrier frequency 652 falls at the boundary between the 20 MHz legacy portion sections 642-3 and 642-4. Thus, in this case also, the offset of the duplicate 20 MHz legacy portion of the preamble prevents the carrier frequency from falling within any legacy 20 MHz section.

As with the example preamble 540 of Fig. 7, one or both of the legacy and non-legacy portions of the composite channel preamble 640 apply rotation factors to reduce the peak-to-average power ratio (PAPR) of the transmitted OFDM signal, in an embodiment. In the example preamble 640 of Fig. 10, subband phase shifts (rotation factors) $\gamma_1$ through $\gamma_5$ are applied to the five 20 MHz legacy portions 642-1 through 642-5, respectively. In an embodiment, the phase shifts $\gamma_1$ through $\gamma_5$ are also applied to the first five 20 MHz subbands of the non-legacy preamble portion, and a sixth phase shift $\gamma_6$ is applied to the sixth 20 MHz subband. In an embodiment, an appropriate power scalar is utilized to maintain the same power for the narrower bandwidth legacy portion and the wider bandwidth non-legacy portion of a transmitted data unit.

The five 20 MHz channels utilized for the legacy portion of the preamble 640 are also used as access control channels, in some embodiments. In these embodiments, the primary channel can be any of the five 20 MHz channels. Use of 20 MHz channels that are offset in frequency for a portion of the preamble, and as access control channels, is described in more detail in U.S. Patent Application No. 13/246,351 (filed September 27, 2011).

In some embodiments and/or scenarios, where a composite channel does not align with the component channels, and where an IDFT size corresponding to a channel larger than the composite channel is utilized, a shifter is used to shift the generated OFDM tones such that the composite channel falls within a desired band. Referring to Fig. 8, for example, and assuming that a carrier frequency equal to the center frequency of the 40 MHz channel 566-2 is utilized, the composite channel 562 represents a 120 MHz channel that has been shifted down by 7.5 MHz (e.g., 24 tones for a 312.5 kHz tone spacing), in order to fit the channel 562 within the Chinese 125 MHz band without physically switching the LO/carrier frequency. To this end, referring as an example to Fig. 2, the shifter 148 shifts the OFDM tones generated by the 40 and 80 MHz transmit flow units 124, 126 down by 24 tones before the IDFT unit 150 performs a 512-point IDFT, in an embodiment. In an embodiment, the OFDM tones are shifted down by the 24 tones as follows:

$$Y(k) = X_{40}(k), \qquad k < 0,$$

$$Y(k) = X_{80}(k), \qquad k > 0,$$

$$Y(k) = Y(k+24), \qquad k < (512-24),$$

and

$$Y(k) = 0, \qquad k > (512-24),$$

where $k$ is the tone index, $Y(k)$ is the output of the shifter, $X_{40}(k)$ is the output of the 40 MHz transmit flow unit, and $X_{80}(k)$ is the output of the 80 MHz transmit flow unit. In some embodiments, $X_{40}(k)$ and/or $X_{80}(k)$ are shifted still further in order to overlap and reduce the number of null tones at the boundary between the 40 and 80 MHz sections, as discussed above. In some embodiments where the LO frequency used as the carrier frequency is physically switched when changing to or from a composite channel, no shifter is included or used.

As stated above, three 40 MHz transmit flow units are utilized to form a 120 MHz composite channel OFDM symbol in some embodiments. In some of these embodiments, the carrier frequency aligns with the center of the middle 40 MHz section of tones in the 120 MHz OFDM symbol, and no shifter is included or used. In other of these embodiments, the carrier does not align with the center of the middle 40 MHz section. Referring to Fig. 8, for example, the center of the 40 MHz channel 566-2 is used as a carrier frequency for the composite channel, in some embodiments (e.g., to eliminate LO/carrier switching when going to or from the 120 MHz channel). In some of these latter embodiments, a shifter shifts the OFDM tones output by the three utilized transmit flow units as needed to fit the composite channel within a desired band (e.g., down by 24 tones as in the example above).

At least some of the various blocks, operations, and techniques described above may be implemented in hardware, a processor executing firmware and/or software instructions, or any combination thereof. When implemented utilizing a processor executing software or firmware instructions, the software or firmware instructions may be stored in any computer readable memory such as on a magnetic disk, an optical disk, or other tangible storage medium, in a RAM or ROM or flash memory, processor, hard disk drive, optical disk drive, tape drive, etc. Likewise, the software or firmware instructions may be delivered to a user or a system via any known or desired delivery method including, for example, on a computer readable disk or other transportable, tangible computer storage mechanism or via communication media. Communication media typically embodies computer readable instructions, data structures, program modules or other data in a modulated data signal such as a carrier wave or other transport mechanism. The term "modulated data signal" means a signal that has one or more of its characteristics set or changed in such a manner as to encode information in the signal. By way of example, and not limitation, communication media includes wired media such as a wired network or direct-wired connection, and wireless media such as acoustic, radio frequency, infrared and other wireless media. Thus, the software or firmware instructions may be delivered to a user or a system via a communication channel such as a telephone line, a DSL line, a cable television line, a fiber optics line, a wireless communication channel, the Internet, etc. (which are viewed as being the same as or interchangeable with providing such software via a transportable storage medium). The software or firmware instructions may include machine readable instructions stored on a memory of other computer-readable storage medium that, when executed by the processor, cause the processor to perform various acts.

When implemented in hardware, the hardware may comprise one or more of discrete components, an integrated circuit, an application-specific integrated circuit (ASIC), a programmable logic device (PLD), etc.

While the present invention has been described with reference to specific examples, which are intended to be illustrative only and not to be limiting of the invention, changes, additions and/or deletions may be made to the disclosed embodiments without departing from the scope of the invention.

## Claims

1. A method of generating an orthogonal frequency division multiplexing, OFDM, symbol (200; 220; 300; 320; 340; 360) in a communication device (14, 25) configured to generate, when in a first transmit mode, a first OFDM symbol (200) using a first transmit flow unit (124) that includes a first tone mapping unit (136-1), the first OFDM symbol having i) a first channel bandwidth, ii) a first number of lower-edge guard tones, and iii) a first number of upper-edge guard tones, and, when in a second transmit mode, generate a second OFDM symbol (220) using a second transmit flow unit (126) that includes a second tone mapping unit, the second OFDM symbol having i) a second channel bandwidth, ii) a second number of lower-edge guard tones, and iii) a second number of upper-edge guard tones, the method comprising:

> generating, using the first transmit flow unit, a first set of OFDM tones when in a composite channel transmit mode;
> generating, using the second transmit flow unit, a second set of OFDM tones when in the composite channel transmit mode; and
> generating a composite channel OFDM symbol (300) comprising the first and second sets of OFDM tones when in the composite channel transmit mode,
> wherein the composite channel OFDM symbol includes lower-edge and upper-edge guard tones, with at least one of i) the number of lower-edge guard tones being greater than the first number of lower-edge guard tones and greater than the second number of lower-edge guard tones, and ii) the number of upper-edge guard tones being greater than the first number of upper-edge guard tones and greater than the second number of upper-edge guard tones,
> wherein the composite channel OFDM symbol includes one or more direct current, DC, tones, wherein the number of DC tones in the composite channel OFDM symbol is less than a sum of i) the first number of upper-edge guard tones and ii) the second number of lower-edge guard tones.

2. A method according to claim 1, wherein the first channel bandwidth is less than the second channel bandwidth, and wherein the composite OFDM symbol (300) has a composite channel bandwidth equal or approximately equal to the sum of the first and second channel bandwidths, and/or wherein each of the first (124) and second (126) transmit flow units further includes at least one of i) an interleaver and ii) a modulator.

3. A method according to claim 1, wherein the communication device (14, 25) is further configured to generate, when in a third transmit mode, a third OFDM symbol having i) a third channel bandwidth, ii) a third number of lower-edge guard tones, and iii) a third number of upper-edge guard tones, wherein the third OFDM symbol is generated using a third transmit flow unit that includes a third tone mapping unit, the method further comprising:

> generating, using the third transmit flow unit, a third set of OFDM tones when in the composite channel transmit mode,
> wherein generating the composite channel OFDM symbol further comprises the third set of OFDM tones when in the composite channel transmit mode.

4. A method according to claim 1, wherein the first set of tones occupies lower subcarrier indices of the composite channel OFDM symbol (300) and the second set of tones occupies higher subcarrier indices of the composite channel OFDM symbol.

5. A method according to claim 4, wherein the composite channel OFDM symbol includes one or more null tones (318) at a boundary between the first and second sets of OFDM tones, and wherein the number of null tones at the boundary is less than a sum of i) the first number of upper-edge guard tones and ii) the second number of lower-edge guard tones.

6. A method according to claim 5, wherein:

> a sum of i) the number of lower-edge guard tones of the composite channel OFDM symbol (300) and ii) the number of upper-edge guard tones of the composite channel OFDM symbol is greater than a difference between i) the sum of the first number of upper-edge guard tones and the second number of lower-edge guard tones, and ii) the number of null tones at the boundary; or
> the composite channel OFDM symbol does not include any null tones between i) the lower-edge guard tones of the composite channel OFDM symbol and ii) the one or more null tones at the boundary, and the composite channel OFDM symbol does not include any null tones between i) the upper-edge guard tones of the composite channel OFDM symbol and ii) the one or more null tones at the boundary.

7. A method according to claim 4, wherein the composite channel OFDM symbol (300) includes one or more null tones (318) at a center of the composite channel.

8. A method according to claim 7, wherein the composite channel OFDM symbol (300) does not include any null tones at a boundary between the first and second sets of OFDM tones.

9. A method according to claim 7, wherein:

the first set of OFDM tones includes at least a first and a second block of OFDM tones,
the second set of OFDM tones includes at least a third and a fourth block of OFDM tones,
the first and the second blocks of OFDM tones are not adjacent to each other within the composite channel OFDM symbol (300), and the third and the fourth blocks of OFDM tones are not adjacent to each other within the composite channel OFDM symbol,
the composite channel OFDM symbol does not include any null tones between i) the lower-edge guard tones of the composite channel OFDM symbol and ii) the one or more null tones at the center of the composite channel, and
the composite channel OFDM symbol does not include any null tones between i) the upper-edge guard tones of the composite channel OFDM symbol and ii) the one or more null tones at the center of the composite channel.

10. A communication device (14, 25), comprising:

a network interface (16, 27) comprising at least i) a first transmit flow unit (124) that includes a first tone mapping unit (136-1), and ii) a second transmit flow unit (126) that includes a second tone mapping unit, wherein the network interface is configured to

generate, using the first transmit flow unit and when in a first transmit mode, a first OFDM symbol (200) having i) a first channel bandwidth, ii) a first number of lower-edge guard tones, and iii) a first number of upper-edge guard tones;
generate, using the second transmit flow unit and when in a second transmit mode, a second OFDM symbol (220) having i) a second channel bandwidth, ii) a second number of lower-edge guard tones, and iii) a second number of upper-edge guard tones;
generate, using the first transmit flow unit and when in a composite channel transmit mode, a first set of OFDM tones;
generate, using the second transmit flow unit and when in the composite channel transmit mode, a second set of OFDM tones; and
generate, when in the composite channel transmit mode, a composite channel OFDM symbol (300) comprising the first and second sets of OFDM tones,
wherein the composite channel OFDM symbol includes lower-edge and upper-edge guard tones, with at least one of i) the number of lower-edge guard tones being greater than the first number of lower-edge guard tones and greater than the second number of lower-edge guard tones, and ii) the number of upper-edge guard tones being greater than the first number of upper-edge guard tones and greater than the second number of upper-edge guard tones, and

wherein the composite channel OFDM symbol includes one or more direct current, DC, tones, wherein the number of DC tones n the composite channel OFDM symbol is less than a sum of i) the first number of upper-edge guard tones and ii) the second number of lower-edge guard tones.

11. A communication device (14, 25) according to claim 10, wherein each of the first (124) and second (126) transmit flow units further includes at least one of i) an interleaver (130) and ii) a modulator (134).

12. A communication device (14, 25) according to claim 10, wherein:

the network interface (16, 27) further comprises one or more inverse discrete Fourier transform, IDFT, units (150), and wherein the network interface is configured to generate the composite channel OFDM symbol (300) at least in part by performing IDFT operations on the composite channel OFDM symbol using the one or more IDFT units; or
the network interface further comprises at least first and second radio transceiver blocks (21, 30), and the network interface is further configured to transmit the composite channel OFDM symbol using at least the first and second radio transceiver blocks, with a portion of the composite channel OFDM symbol corresponding to the first set of OFDM tones being transmitted via the first radio transceiver block and a portion of the composite channel OFDM symbol corresponding to the second set of OFDM tones being transmitted via the second radio transceiver block; or
the network interface further comprises at least a first radio transceiver block, and the network interface is further configured to transmit an entirety of the composite channel OFDM symbol using the first radio transceiver block.

13. A communication device (14, 25) according to claim 10, wherein
the composite channel OFDM symbol (300) includes the first set of tones in a lower frequency portion and the second set of tones in an upper frequency portion,
the composite channel OFDM symbol includes one or more null tones (318) at a boundary between the first and second sets of OFDM tones, and
the number of null tones at the boundary is less than a sum of i) the first number of upper-edge guard tones and ii) the second number of lower-edge guard tones.

14. A method of generating an OFDM symbol (200; 220; 300; 320; 340; 360) in a communication device (14, 25) configured to generate, when in a first transmit mode, a first OFDM symbol using a first transmit flow unit (124) that includes a first tone mapping unit (136), the first OFDM symbol (200) having i) a first channel bandwidth, ii) a first number of lower-edge guard tones, and iii) a first number of upper-edge guard tones, and, when in a second transmit mode, generate a second OFDM symbol using a second transmit flow unit (126) that includes a second tone mapping unit, the second OFDM symbol (220) having i) a second channel bandwidth, ii) a second number of lower-edge guard tones, and iii) a second number of upper-edge guard tones, wherein the first OFDM symbol is generated, and wherein the second OFDM symbol is generated using a second transmit flow unit (126) that includes a second tone mapping unit, the method comprising:

generating, using the first transmit flow unit, a first set of OFDM tones when in a composite channel transmit mode;
generating, using the second transmit flow unit, a second set of OFDM tones when in the composite channel transmit mode; and
generating a composite channel OFDM symbol (300) comprising the first and second sets of OFDM tones when in the composite channel transmit mode,
wherein the composite channel OFDM symbol includes lower-edge and upper-edge guard tones, and wherein the total number of lower-edge and upper-edge guard tones is i) greater than the sum of the first number of lower-edge guard tones and the second number of upper-edge guard tones, and ii) greater than the sum of the first number of upper-edge guard tones and the second number of lower-edge guard tones
wherein the composite channel OFDM symbol includes one or more direct current, DC, tones, wherein the number of DC tones in the composite channel OFDM symbol is less than a sum of i) the first number of upper-edge guard tones and ii) the second number of lower-edge guard tones.

15. A method according to claim 14, wherein:

the composite channel OFDM symbol (300) includes the first set of tones in a lower frequency portion and the second set of tones in an upper frequency portion,
the composite channel OFDM symbol includes one or more null tones (318) at a boundary between the first and second sets of OFDM tones, and
the number of null tones at the boundary is less than a sum of i) the first number of upper-edge guard tones and ii) the second number of lower-edge guard tones.

**Patentansprüche**

1. Verfahren zum Erzeugen eines Orthogonalfrequenzmultiplex bzw. OFDM-Symbols (200; 220; 300; 320; 340; 360) in einem Kommunikationsgerät (14, 25), das konfiguriert ist zum Erzeugen, in einem ersten Sendemodus, eines ersten OFDM-Symbols (200) unter Verwendung einer ersten Sendeflusseinheit (124), die eine erste Tonmappingeinheit (136-1) enthält, wobei das erste OFDM-Symbol i) eine erste Kanalbandbreite, ii) eine erste Anzahl von Unterrand-Schutztönen und iii) eine erste Anzahl von Oberrand-Schutztönen aufweist, und zum Erzeugen, in einem zweiten Sendemodus, eines zweiten OFDM-Symbols (220) unter Verwendung einer zweiten Sendeflusseinheit (126), die eine zweite Tonmappingeinheit enthält, wobei das zweite OFDM-Symbol i) eine zweite Kanalbandbreite, ii) eine zweite Anzahl von Unterrand-Schutztönen und iii) eine zweite Anzahl von Oberrand-Schutztönen aufweist, wobei das Verfahren umfasst:

Erzeugen, unter Verwendung der ersten Sendeflusseinheit und in einem Zusammengesetzter-Kanal-Sendemodus, eines ersten Satzes von OFDM-Tönen,

Erzeugen, unter Verwendung der zweiten Sendeflusseinheit und in dem Zusammengesetzter-Kanal-Sendemodus, eines zweiten Satzes von OFDM-Tönen, und

Erzeugen, in dem Zusammengesetzter-Kanal-Sendemodus, eines Zusammengesetzter-Kanal-OFDM-Symbols (300), das die ersten und zweiten Sätze von OFDM-Tönen enthält,

wobei das Zusammengesetzter-Kanal-OFDM-Symbol Unterrand- und Oberrand-Schutztöne enthält, wobei i) die Anzahl von Unterrand-Schutztönen größer ist als die erste Anzahl von Unterrand-Schutztönen und größer als die zweite Anzahl von Unterrand-Schutztönen und/oder ii) die Anzahl von Oberrand-Schutztönen größer ist als die erste Anzahl von Oberrand-Schutztönen und größer als die zweite Anzahl von Oberrand-Schutztönen, und

wobei das Zusammengesetzter-Kanal-OFDM-Symbol einen oder mehrere Gleichstromtöne umfasst, wobei die Anzahl von Gleichstromtönen in dem Zusammengesetzter-Kanal-OFDM-Symbol kleiner ist als die Summe aus i) der ersten Anzahl von Oberrand-Schutztönen und ii) der zweiten Anzahl von Unterrand-Schutztönen.

2. Verfahren nach Anspruch 1, wobei die erste Kanalbandbreite kleiner ist als die zweite Kanalbandbreite und wobei das zusammengesetzte OFDM-Symbol (300) eine zusammengesetzte Kanalbandbreite aufweist, die gleich oder ungefähr gleich der Summe aus den ersten und zweiten Kanalbandbreiten ist und/oder wobei die ersten und zweiten Sendeflusseinheiten (124, 126) weiterhin jeweils i) einen Verschachteler und/oder ii) einen Modulator enthalten.

3. Verfahren nach Anspruch 1, wobei das Kommunikationsgerät (14, 25) weiterhin konfiguriert ist zum Erzeugen, in einem dritten Sendemodus, eines dritten OFDM-Symbols, das i) eine dritte Kanalbandbreite, ii) eine dritte Anzahl von Unterrand-Schutztönen und iii) eine dritte Anzahl von Oberrand-Schutztönen aufweist, wobei das dritte OFDM-Symbol unter Verwendung einer dritten Sendeflusseinheit erzeugt wird, die eine dritte Tonmappingeinheit enthält, wobei das Verfahren weiterhin umfasst:

Erzeugen, unter Verwendung der dritten Sendeflusseinheit und in dem Zusammengesetzter-Kanal-Sendemodus, eines dritten Satzes von OFDM-Tönen,

wobei das Erzeugen des Zusammengesetzter-Kanal-OFDM-Symbols in dem Zusammengesetzter-Kanal-Sendemodus weiterhin den dritten Satz von OFDM-Tönen umfasst.

4. Verfahren nach Anspruch 1, wobei der erste Satz von Tönen niedrigere Subträger-Indizes des Zusammengesetzter-Kanal-OFDM-Symbols (300) einnimmt und der zweite Satz von Tönen höhere Subträger-Indizes des Zusammengesetzter-Kanal-OFDM-Symbols einnimmt.

5. Verfahren nach Anspruch 4, wobei das Zusammengesetzter-Kanal-OFDM-Symbol einen oder mehrere Nulltöne (318) an einer Grenze zwischen den ersten und zweiten Sätzen von OFDM-Tönen enthält und wobei die Anzahl von Nulltönen an der Grenze kleiner ist als eine Summe aus i) der ersten Anzahl von Oberrand-Schutztönen und ii) der zweiten Anzahl von Unterrand-Schutztönen.

6. Verfahren nach Anspruch 5, wobei:

die Summe aus i) der Anzahl von Unterrand-Schutztönen des Zusammengesetzter-Kanal-OFDM-Symbols (300) und ii) der Anzahl von Oberrand-Schutztönen des Zusammengesetzter-Kanal-OFDM-Symbols größer ist als eine Differenz zwischen i) der Summe aus der ersten Anzahl von Oberrand-Schutztönen und der zweiten Anzahl von Unterrand-Schutztönen und ii) der Anzahl von Nulltönen an der Grenze, oder

das Zusammengesetzter-Kanal-OFDM-Symbol keine Nulltöne zwischen i) den Unterrand-Schutztönen des Zusammengesetzter-Kanal-OFDM-Symbols und ii) dem einen oder den mehreren Nulltönen an der Grenze enthält und das Zusammengesetzter-Kanal-OFDM-Symbol keine Nulltöne zwischen i) den Oberrand-Schutztönen des Zusammengesetzter-Kanal-OFDM-Symbols und ii) dem einen oder den mehreren Nulltönen an der Grenze enthält.

7. Verfahren nach Anspruch 4, wobei das Zusammengesetzter-Kanal-OFDM-Symbol (300) einen oder mehrere Nulltöne (318) in der Mitte des zusammengesetzten Kanals enthält.

8. Verfahren nach Anspruch 7, wobei das Zusammengesetzter-Kanal-OFDM-Symbol (300) keine Nulltöne an einer Grenze zwischen den ersten und zweiten Sätzen von OFDM-Tönen enthält.

9. Verfahren nach Anspruch 7, wobei:

der erste Satz von OFDM-Tönen wenigstens einen ersten und einen zweiten Block von OFDM-Tönen enthält, der zweite Satz von OFDM-Tönen wenigstens einen dritten und einen vierten Block von OFDM-Tönen enthält, die ersten und zweiten Blöcke von OFDM-Tönen in dem Zusammengesetzter-Kanal-OFDM-Symbol (300) nicht zueinander benachbart sind und die dritten und vierten Blöcke von OFDM-Tönen in dem Zusammengesetzter-Kanal-OFDM-Symbol nicht zueinander benachbart sind,

das Zusammengesetzter-Kanal-OFDM-Symbol keine Nulltöne zwischen i) den Unterrand-Schutztönen des Zusammengesetzter-Kanal-OFDM-Symbols und ii) dem einen oder den mehreren Nulltönen in der Mitte des zusammengesetzten Kanals enthält, und

das Zusammengesetzter-Kanal-OFDM-Symbol keine Nulltöne zwischen i) den Oberrand-Schutztönen des Zusammengesetzter-Kanal-OFDM-Symbols und ii) dem einen oder den mehreren Nulltönen in der Mitte des zusammengesetzten Kanals enthält.

10. Kommunikationsgerät (14, 25), das umfasst:

eine Netzwerkschnittstelle (16, 27) mit wenigstens i) einer ersten Sendeflusseinheit (124), die eine erste Tonmappingeinheit (136-1) enthält, und ii) einer zweiten Sendeflusseinheit (126), die eine zweite Tonmappingeinheit enthält, wobei die Netzwerkschnittstelle konfiguriert ist zum:

Erzeugen, unter Verwendung der ersten Sendeflusseinheit und in einem ersten Sendemodus, eines ersten OFDM-Symbols (200), das i) eine erste Kanalbandbreite, ii) eine erste Anzahl von Unterrand-Schutztönen und iii) eine erste Anzahl von Oberrand-Schutztönen aufweist,

Erzeugen, unter Verwendung der zweiten Sendeflusseinheit und in einem zweiten Sendemodus, eines zweiten OFDM-Symbols (220), das i) eine zweite Kanalbandbreite, ii) eine zweite Anzahl von Unterrand-Schutztönen und iii) eine zweite Anzahl von Oberrand-Schutztönen aufweist,

Erzeugen, unter Verwendung der ersten Sendeflusseinheit und in einem Zusammengesetzter-Kanal-Sendemodus, eines ersten Satzes von OFDM-Tönen,

Erzeugen, unter Verwendung der zweiten Sendeflusseinheit und in dem Zusammengesetzter-Kanal-Sendemodus, eines zweiten Satzes von OFDM-Tönen, und

Erzeugen, in dem Zusammengesetzter-Kanal-Sendemodus, eines Zusammengesetzter-Kanal-OFDM-Symbols (300), das die ersten und zweiten Sätze von OFDM-Tönen enthält,

wobei das Zusammengesetzter-Kanal-OFDM-Symbol Unterrand- und Oberrand-Schutztöne enthält, wobei i) die Anzahl von Unterrand-Schutztönen größer ist als die erste Anzahl von Unterrand-Schutztönen und größer ist als die zweite Anzahl von Unterrand-Schutztönen und/oder ii) die Anzahl von Oberrand-Schutztönen größer ist als die erste Anzahl von Oberrand-Schutztönen und größer ist als die zweite Anzahl von Oberrand-Schutztönen, und

wobei das Zusammengesetzter-Kanal-OFDM-Symbol einen oder mehrere Gleichstromtöne umfasst, wobei die Anzahl von Gleichstromtönen in dem Zusammengesetzter-Kanal-OFDM-Symbol kleiner ist als die Summe aus i) der ersten Anzahl von Oberrand-Schutztönen und ii) der zweiten Anzahl von Unterrand-Schutztönen.

11. Kommunikationsgerät (14, 25) nach Anspruch 10, wobei die ersten und zweiten Sendeflusseinheiten (124, 126) weiterhin jeweils i) einen Verschachteler (130) und/oder ii) einen Modulator (134) enthalten.

12. Kommunikationsgerät (14, 25) nach Anspruch 10, wobei:

die Netzwerkschnittstelle (16, 27) weiterhin eine oder mehrere inverse, diskrete Fourier-Transformation (IDFT)-Einheiten (150) umfasst und wobei die Netzwerkschnittstelle konfiguriert ist zum Erzeugen des Zusammengesetzter-Kanal-OFDM-Symbols (300) wenigstens teilweise durch das Durchführen von IDFT-Operationen auf dem Zusammengesetzter-Kanal-OFDM-Symbol unter Verwendung der einen oder der mehreren IDFT-Einheiten, oder

die Netzwerkschnittstelle weiterhin wenigstens erste und zweite Funksendeempfängerblöcke (21, 30) umfasst und die Netzwerkschnittstelle weiterhin konfiguriert ist zum Senden des Zusammengesetzter-Kanal-OFDM-Symbols unter Verwendung wenigstens der ersten und zweiten Funksendeempfängerblöcke, wobei ein Teil des Zusammengesetzter-Kanal-OFDM-Symbols in Entsprechung zu dem ersten Satz von OFDM-Tönen über den ersten Funksendeempfängerblock gesendet wird und ein Teil des Zusammengesetzter-Kanal-OFDM-Symbols in Entsprechung zu dem zweiten Satz von OFDM-Tönen über den zweiten Funksendeempfängerblock gesendet wird, oder

die Netzwerkschnittstelle weiterhin wenigstens einen ersten Funksendeempfängerblock umfasst und die Netzwerkschnittstelle weiterhin konfiguriert ist zum Senden des vollständigen Zusammengesetzter-Kanal-OFDM-Symbols unter Verwendung des ersten Funksendeempfängerblocks.

**13.** Kommunikationsgerät (14, 25) nach Anspruch 10, wobei:

das Zusammengesetzter-Kanal-OFDM-Symbol (300) den ersten Satz von Tönen in einem niedrigeren Frequenzteil und den zweiten Satz von Tönen in einem höheren Frequenzteil enthält,
das Zusammengesetzter-Kanal-OFDM-Symbol einen oder mehrere Nulltöne (318) an einer Grenze zwischen den ersten und zweiten Sätzen von OFDM-Tönen enthält, und
die Anzahl von Nulltönen an der Grenze kleiner ist als eine Summe aus i) der ersten Anzahl von Oberrand-Schutztönen und ii) der zweiten Anzahl von Unterrand-Schutztönen.

**14.** Verfahren zum Erzeugen eines OFDM-Symbols (200; 220; 300; 320; 340; 360) in einem Kommunikationsgerät (14, 25), das konfiguriert ist zum Erzeugen, in einem ersten Sendemodus, eines ersten OFDM-Symbols unter Verwendung einer ersten Sendeflusseinheit (124), die eine erste Tonmappingeinheit (136) enthält, wobei das erste OFDM-Symbol (200) i) eine erste Kanalbandbreite, ii) eine erste Anzahl von Unterrand-Schutztönen und iii) eine erste Anzahl von Oberrand-Schutztönen aufweist, und zum Erzeugen, in einem zweiten Sendemodus, eines zweiten OFDM-Symbols unter Verwendung einer zweiten Sendeflusseinheit (126), die eine zweite Tonmappingeinheit enthält, wobei das zweite OFDM-Symbol (220) i) eine zweite Kanalbandbreite, ii) eine zweite Anzahl von Unterrand-Schutztönen und iii) eine zweite Anzahl von Oberrand-Schutztönen aufweist, wobei das erste OFDM-Symbol erzeugt wird, und wobei das zweite OFDM-Symbol erzeugt wird unter Verwendung einer zweiten Sendeflusseinheit (126), die eine zweite Tonmappingeinheit enthält, wobei das Verfahren umfasst:

Erzeugen, unter Verwendung der ersten Sendeflusseinheit und in einem Zusammengesetzter-Kanal-Sendemodus, eines ersten Satzes von OFDM-Tönen,
Erzeugen, unter Verwendung der zweiten Sendeflusseinheit und in dem Zusammengesetzter-Kanal-Sendemodus, eines zweiten Satzes von OFDM-Tönen, und
Erzeugen, in dem Zusammengesetzter-Kanal-Sendemodus, eines Zusammengesetzter-Kanal-OFDM-Symbols (300), das die ersten und zweiten Sätze von OFDM-Tönen enthält,
wobei das Zusammengesetzter-Kanal-OFDM-Symbol Unterrand- und Oberrand-Schutztöne enthält, wobei i) die Anzahl von Unterrand- und Oberrand-Schutztönen größer ist als die Summe aus der ersten Anzahl von Unterrand-Schutztönen und der zweiten Anzahl von Oberrand-Schutztönen und ii) größer ist als die Summe aus der ersten Anzahl von Oberrand-Schutztönen und der zweiten Anzahl von Unterrand-Schutztönen,
wobei das Zusammengesetzter-Kanal-OFDM-Symbol einen oder mehrere Gleichstromtöne enthält, wobei die Anzahl von Gleichstromtönen in dem Zusammengesetzter-Kanal-OFDM-Symbol kleiner ist als die Summe aus i) der ersten Anzahl von Oberrand-Schutztönen und ii) der zweiten Anzahl von Unterrand-Schutztönen.

**15.** Verfahren nach Anspruch 14, wobei:

das Zusammengesetzter-Kanal-OFDM-Symbol (300) den ersten Satz von Tönen in einem niedrigeren Frequenzteil und den zweiten Satz von Tönen in einem höheren Frequenzteil enthält,
das Zusammengesetzter-Kanal-OFDM-Symbol einen oder mehrere Nulltöne (318) an einer Grenze zwischen den ersten und zweiten Sätzen von OFDM-Tönen enthält, und die Anzahl von Nulltönen an der Grenze kleiner ist als eine Summe aus i) der ersten Anzahl von Oberrand-Schutztönen und ii) der zweiten Anzahl von Unterrand-Schutztönen.

**Revendications**

**1.** Procédé de génération d'un symbole de multiplexage par répartition en fréquences orthogonales OFDM (200 ; 220 ; 300 ; 320 ; 340 ; 360), soit Orthogonal Frequency Division Multiplexing dans un dispositif de communication (14, 25) configuré pour générer, dans un premier mode de transmission, un premier symbole OFDM (200) en utilisant une première unité de flux de transmission (124) qui comprend une première unité de mappage tonal (136-1), le premier symbole OFDM ayant i) une première bande passante de canal, ii) un premier nombre de tonalités de garde de bord inférieur, et iii) un premier nombre de tonalités de garde de bord supérieur, et pour générer, dans un deuxième mode de transmission, un deuxième symbole OFDM (220) en utilisant une deuxième unité de flux de transmission (126) qui comprend une deuxième unité de mappage tonal, le deuxième symbole OFDM ayant i) une deuxième bande passante de canal, ii) un deuxième nombre de tonalités de garde de bord inférieur, et iii) un deuxième nombre de tonalités de garde de bord supérieur, le procédé comprenant :

> la génération, à l'aide de la première unité de flux de transmission, d'un premier ensemble de tonalités OFDM dans un mode de transmission à canal composé ;
> la génération, à l'aide de la deuxième unité de flux de transmission, d'un deuxième ensemble de tonalités OFDM en mode de transmission à canal composé ; et
> la génération d'un symbole OFDM à canal composé (300) comprenant les premier et deuxième ensembles de tonalités OFDM en mode de transmission à canal composé,
> dans lequel le symbole OFDM à canal composé inclut des tonalités de garde de bord inférieur et de bord supérieur, avec au moins une condition parmi i) un nombre de tonalités de garde de bord inférieur plus grand que le premier nombre de tonalités de garde de bord inférieur et plus grand que le deuxième nombre de tonalités de garde de bord inférieur, et ii) un nombre de tonalités de garde de bord inférieur plus grand que le premier nombre de tonalités de garde de bord supérieur et plus grand que le deuxième nombre de tonalités de garde de bord supérieur,
> dans lequel le symbole OFDM de canal composé inclut une ou plusieurs tonalités de courant continu CC, dans lequel le nombre de tonalités CC dans le symbole OFDM de canal composé est plus petit que la somme i) du premier nombre de tonalités de garde de bord supérieur, et ii) du deuxième nombre de tonalités de garde de bord inférieur.

2. Procédé selon la revendication 1, dans lequel la première bande passante de canal est plus petite que la deuxième bande passante de canal, et dans lequel le symbole OFDM composé (300) présente une bande passante de canal composé égale, ou approximativement égale, à la somme des première et deuxième bandes passantes de canal, et/ou dans lequel chacune des première (124) et deuxième (126) unités de flux de transmission comprend en outre au moins un élément parmi i) un entrelaceur et ii) un modulateur.

3. Procédé selon la revendication 1, dans lequel le dispositif de communication (14, 25) est en outre configuré pour générer, dans un troisième mode de transmission, un troisième symbole OFDM comportant i) une troisième bande passante de canal, ii) un troisième nombre de tonalités de garde de bord inférieur, et iii) un troisième nombre de tonalités de garde de bord supérieur, dans lequel le troisième symbole OFDM est généré en utilisant une troisième unité de flux de transmission qui comprend une troisième unité de mappage tonal, le procédé comprenant en outre :

> la génération, à l'aide de la troisième unité de flux de transmission, d'un troisième ensemble de tonalités OFDM en mode de transmission à canal composé,
> dans lequel la génération du symbole OFDM à canal composé comprend en outre le troisième ensemble de tonalités OFDM en mode de transmission à canal composé,

4. Procédé selon la revendication 1, dans lequel le premier ensemble de tonalités occupe des indices de sous-porteuse inférieurs du symbole OFDM de canal composé (300) et le deuxième ensemble de tonalités occupe des indices de sous-porteuse supérieurs du symbole OFDM de canal composé.

5. Procédé selon la revendication 4, dans lequel le symbole OFDM de canal composé comprend une ou plusieurs tonalités nulles (318) à une délimitation entre les premier et deuxième ensembles de tonalités OFDM, et dans lequel le nombre de tonalités nulles à la délimitation est plus petit que la somme i) du premier nombre de tonalités de garde de bord supérieur et ii) du deuxième nombre de tonalités de garde de bord inférieur.

6. Procédé selon la revendication 5, dans lequel :

> la somme i) du nombre de tonalités de garde de bord inférieur du symbole OFDM de canal composé (300) et ii) du nombre de tonalités de garde de bord supérieur du symbole OFDM de canal composé est plus grande que la différence entre i) la somme du premier nombre de tonalités de garde de bord supérieur et du deuxième nombre de tonalités de garde de bord inférieur, et ii) le nombre de tonalités nulles à la délimitation ; ou
> le symbole OFDM de canal composé n'inclut aucune tonalité nulle entre i) les tonalités de garde de bord inférieur du symbole OFDM de canal composé et ii) lesdites une ou plusieurs tonalités nulles à la délimitation, et le symbole OFDM de canal composé n'inclut aucune tonalité nulle entre i) les tonalités de garde de bord supérieur du symbole OFDM de canal composé et ii) lesdites une ou plusieurs tonalités nulles à la délimitation.

7. Procédé selon la revendication 4, dans lequel le symbole OFDM de canal composé (300) inclut une ou plusieurs tonalités nulles (318) au centre du canal composé.

**8.** Procédé selon la revendication 7, dans lequel le symbole OFDM de canal composé (300) n'inclut aucune tonalité nulle à une délimitation entre les premier et deuxième ensembles de tonalités OFDM.

**9.** Procédé selon la revendication 7, dans lequel :

le premier ensemble de tonalités OFDM inclut au moins des premier et deuxième blocs de tonalités OFDM, le deuxième ensemble de tonalités OFDM inclut au moins des troisième et quatrième blocs de tonalités OFDM, les premier et deuxième blocs de tonalités OFDM ne sont pas adjacents entre eux dans le symbole OFDM de canal composé (300), et les troisième et quatrième blocs de tonalités OFDM ne sont pas adjacents entre eux dans le symbole OFDM de canal composé, le symbole OFDM de canal composé n'inclut aucune tonalité nulle entre i) les tonalités de garde de bord inférieur du symbole OFDM de canal composé et ii) lesdites une ou plusieurs tonalités nulles au centre du canal composé, et le symbole OFDM de canal composé n'inclut aucune tonalité nulle entre i) les tonalités de garde de bord supérieur du symbole OFDM de canal composé et ii) lesdites une ou plusieurs tonalités nulles au centre du canal composé.

**10.** Dispositif de communication (14, 25), comprenant :

une interface réseau (16, 27) comprenant au moins i) une première unité de flux de transmission (124) qui inclut une première unité de mappage tonal (136-1), et ii) une deuxième unité de flux de transmission (126) qui inclut une deuxième unité de mappage tonal, dans lequel l'interface réseau est configurée pour

générer, en utilisant la première unité de flux de transmission et en premier mode de transmission, un premier symbole OFDM (200) comportant i) une première bande passante de canal, ii) un premier nombre de tonalités de garde de bord inférieur, et iii) un premier nombre de tonalités de garde de bord supérieur ; générer, en utilisant la deuxième unité de flux de transmission et en deuxième mode de transmission, un deuxième symbole OFDM (220) comportant i) une deuxième bande passante de canal, ii) un deuxième nombre de tonalités de garde de bord inférieur, et iii) un deuxième nombre de tonalités de garde de bord supérieur ; générer, à l'aide de la première unité de flux de transmission et en mode de transmission de canal composé, un premier ensemble de tonalités OFDM ; générer, à l'aide de la deuxième unité de flux de transmission et en mode de transmission à canal composé, un deuxième ensemble de tonalités OFDM ; et générer, en mode de transmission à canal composé, un symbole OFDM à canal composé (300) comprenant les premier et deuxième ensembles de tonalités OFDM,

dans lequel le symbole OFDM à canal composé inclut des tonalités de garde de bord inférieur et de bord supérieur, avec au moins une condition parmi i) un nombre de tonalités de garde de bord inférieur plus grand que le premier nombre de tonalités de garde de bord inférieur et plus grand que le deuxième nombre de tonalités de garde de bord inférieur, et ii) un nombre de tonalités de garde de bord supérieur plus grand que le premier nombre de tonalités de garde de bord supérieur et plus grand que le deuxième nombre de tonalités de garde de bord supérieur, et dans lequel le symbole OFDM de canal composé inclut une ou plusieurs tonalités de courant continu CC, dans lequel le nombre de tonalités CC dans le symbole OFDM de canal composé est plus petit que la somme i) du premier nombre de tonalités de garde de bord supérieur et ii) du deuxième nombre de tonalités de garde de bord inférieur.

**11.** Dispositif de communication (14, 25) selon la revendication 10, dans lequel chacune des première (124) et deuxième (126) unités de flux de transmission comprend en outre au moins un élément parmi i) un entrelaceur (130) et ii) un modulateur (134).

**12.** Dispositif de communication (14, 25) selon la revendication 10, dans lequel :

l'interface réseau (16, 27) comprend en outre une ou plusieurs unités de transformation de Fourier discrète inverse IDFT (150), soit Inverse Discrète Fourier Transform, et dans lequel l'interface réseau est configurée pour générer le symbole OFDM de canal composé (300) au moins en partie en mettant en oeuvre des opérations IDFT sur le symbole OFDM de canal composé en utilisant lesdites une ou plusieurs unités IDFT ; ou

l'interface réseau comprend en outre au moins des premier et deuxième blocs à émetteur-récepteur radio (21, 30), et l'interface réseau est en outre configurée pour transmettre le symbole OFDM de canal composé en utilisant au moins les premier et deuxième blocs à émetteur-récepteur radio, avec une portion du symbole OFDM de canal composé correspondant au premier ensemble de tonalités OFDM transmises via le premier bloc à émetteur-récepteur radio et une portion du symbole OFDM de canal composé correspondant au deuxième ensemble de tonalités OFDM transmises via le deuxième bloc à émetteur-récepteur radio ; ou

l'interface réseau comprend en outre au moins un premier bloc à émetteur-récepteur radio, et l'interface réseau est en outre configurée pour transmettre l'entièreté du symbole OFDM de canal composé en utilisant le premier bloc à émetteur-récepteur radio.

**13.** Dispositif de communication (14, 25) selon la revendication 10, dans lequel

le symbole OFDM de canal composé (300) comprend le premier ensemble de tonalités dans une portion de fréquence inférieure et le deuxième ensemble de tonalités dans une portion de fréquence supérieure,

le symbole OFDM de canal composé comprend une ou plusieurs tonalités nulles (318) à une délimitation entre les premier et deuxième ensembles de tonalités OFDM, et

le nombre de tonalités nulles à la délimitation est plus petit que la somme i) du premier nombre de tonalités de garde de bord supérieur et ii) du deuxième nombre de tonalités de garde de bord inférieur.

**14.** Procédé de génération d'un symbole OFDM (200 ; 220 ; 300 ; 320 ; 340 ; 360) dans un dispositif de communication (14, 25) configuré pour générer, dans un premier mode de transmission, un premier symbole OFDM en utilisant une première unité de flux de transmission (124) qui comprend une première unité de mappage tonal (136), le premier symbole OFDM (200) ayant i) une première bande passante de canal, ii) un premier nombre de tonalités de garde de bord inférieur, et iii) un premier nombre de tonalités de garde de bord supérieur, et, dans un deuxième mode de transmission, pour générer un deuxième symbole OFDM en utilisant une deuxième unité de flux de transmission (126) qui comprend une deuxième unité de mappage tonal, le deuxième symbole OFDM (220) ayant i) une deuxième bande passante de canal, ii) un deuxième nombre de tonalités de garde de bord inférieur, et iii) un deuxième nombre de tonalités de garde de bord supérieur, dans lequel le premier symbole OFDM est généré, et dans lequel le deuxième symbole OFDM est généré en utilisant une deuxième unité de flux de transmission (126) qui comprend une deuxième unité de mappage tonal, le procédé comprenant :

la génération, à l'aide de la première unité de flux de transmission, d'un premier ensemble de tonalités OFDM dans un mode de transmission à canal composé ;

la génération, à l'aide de la deuxième unité de flux de transmission, d'un deuxième ensemble de tonalités OFDM en mode de transmission à canal composé ;

la génération d'un symbole OFDM à canal composé (300) comprenant les premier et deuxième ensembles de tonalités OFDM en mode de transmission à canal composé,

dans lequel le symbole OFDM à canal composé inclut des tonalités de garde de bord inférieur et de bord supérieur, et dans lequel le nombre total de tonalités de garde de bord inférieur et de bord supérieur est i) plus grand que la somme du premier nombre de tonalités de garde de bord inférieur et du deuxième nombre de tonalités de garde de bord supérieur, et ii) plus grand que la somme du premier nombre de tonalités de garde de bord supérieur et du deuxième nombre de tonalités de garde de bord inférieur,

dans lequel le symbole OFDM de canal composé inclut une ou plusieurs tonalités de courant continu CC, dans lequel le nombre de tonalités CC dans le symbole OFDM de canal composé est plus petit que la somme i) du premier nombre de tonalités de garde de bord supérieur et ii) du deuxième nombre de tonalités de garde de bord inférieur.

**15.** Procédé selon la revendication 14, dans lequel :

le symbole OFDM de canal composé (300) comprend le premier ensemble de tonalités dans une portion de fréquence inférieure et le deuxième ensemble de tonalités dans une portion de fréquence supérieure,

le symbole OFDM de canal composé comprend une ou plusieurs tonalités nulles (318) à une délimitation entre les premier et deuxième ensembles de tonalités OFDM, et

le nombre de tonalités nulles à la délimitation est plus petit que la somme i) du premier nombre de tonalités de garde de bord supérieur et ii) du deuxième nombre de tonalités de garde de bord inférieur.

FIG. 1

*FIG. 2*

EP 2 628 285 B1

**FIG. 3A**

200

Index: -64          0          +63

238-1    230-1    234    230-2    238-2

**FIG. 3B**

220

Index: -128          0          +127

248-1    240-1    244    240-2    248-2

FIG. 4A

300

80 MHz section

40 MHz section

316

308-2

312

308-1

318

306-2

310

306-1

314

FIG. 4B

320

80 MHz section

40 MHz section

336

328

312

338

326

334

FIG. 4C

FIG. 4D

*FIG. 5*

400

Generate a first set of OFDM tones using a first transmit flow ⟋ 420

Generate a second set of OFDM tones using a second transmit flow ⟋ 440

Generate a composite channel OFDM symbol comprising the first and second sets of OFDM tones, and having an increased number of lower-edge and/or upper-edge guard tones ⟋ 460

EP 2 628 285 B1

**FIG. 6**

500 ⌐

| 502 | 504 | 506 | 508 | 512 | 514-1 | | 514-N | 518 | 522 |
|---|---|---|---|---|---|---|---|---|---|
| L-STF | L-LTF | L-SIG | VHT-SIGA | VHT-STF | VHT-LTF1 | · · · | VHT-LTFN | VHT-SIGB | VHT-DATA |

## FIG. 7

540

EP 2 628 285 B1

550  552

544  546

| 80 MHZ (VHT) | | | | 40 MHZ (VHT) | |
|---|---|---|---|---|---|
| 20 MHZ (LEG) | 20 MHZ (LEG) | 20 MHZ (LEG) | 20 MHZ (LEG) | 20 MHZ (LEG) | 20 MHZ (LEG) |
| 542-1 | 542-2 | 542-3 | 542-4 | 542-5 | 542-6 |

Subband phase shifts  $\gamma_1$  $\gamma_2$  $\gamma_3$  $\gamma_4$  $\gamma_5$  $\gamma_6$

EP 2 628 285 B1

**FIG. 8**

564-1  564-2  564-3  564-4  564-5

566-1  566-2

568

562

7.5 MHz

12.5 MHz

560

5727.5
MHz

570  572

5847.5
MHz

FREQUENCY

FIG. 9A

FIG. 9B

FIG. 10

EP 2 628 285 B1

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 2004208253 A1
- US 2008205455 A1
- WO 2005112319 A2
- US 03440911 A
- US 13246351 B
- US 23167011 A
- US 24635111 A

**Non-patent literature cited in the description**

- **YOUHAN KIM et al.** 160 MHz PHY Transmission. *Altheros P802.11 IEEE Draft Standard for Information Technology: - Specific Requirements - Part 11: Wireless LAN Medium Access Control (MAC) and Physical Layer (PHY) Specifications,* 17 May 2010, https://mentor.ieee.org/802.11/dcn/10/ 11-10-0378-01-00ac-160-mhz-phy-transmission.ppt